(19) Europäisches Patentamt / European Patent Office / Office européen des brevets

(11) **EP 3 744 613 B1**

(12) **EUROPEAN PATENT SPECIFICATION**

(45) Date of publication and mention
of the grant of the patent:
**27.10.2021 Bulletin 2021/43**

(51) Int Cl.:
**B62D 6/00** *(2006.01)*     *B62D 15/02* *(2006.01)*

(21) Application number: **20173194.0**

(22) Date of filing: **06.05.2020**

(54) **CONTROL DEVICE FOR STEERING APPARATUS**

STEUERVORRICHTUNG FÜR EINE LENKVORRICHTUNG

DISPOSITIF DE COMMANDE POUR APPAREIL DE DIRECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.05.2019 JP 2019091637**

(43) Date of publication of application:
**02.12.2020 Bulletin 2020/49**

(73) Proprietor: **JTEKT CORPORATION
Osaka-shi,
Osaka 542-8502 (JP)**

(72) Inventors:
• **NAMIKAWA, Isao**
 **Osaka-shi, Osaka 542-8502 (JP)**
• **ANRAKU, Koji**
 **Osaka-shi, Osaka 542-8502 (JP)**

(74) Representative: **Winter, Brandl - Partnerschaft
mbB
Alois-Steinecker-Straße 22
85354 Freising (DE)**

(56) References cited:
**US-A1- 2018 339 725     US-A1- 2019 092 384**

## Description

BACKGROUND OF THE INVENTION

1. Field of the Invention

The invention relates to a control device for a steering apparatus.

2. Description of Related Art

There is known a so-called steer-by-wire type steering apparatus in which dynamic power transmission between a steering wheel and turning wheels is mechanically isolated. The steering apparatus includes a reaction motor as a generation source of a steering reaction force that is given to a steering shaft, and a turning motor as a generation source of a turning force by which the turning wheels are turned. At the time of traveling of a vehicle, a control device of the steering apparatus executes a reaction force control to generate the steering reaction force through the reaction motor, and executes a turning control to turn the turning wheels through the turning motor.

In the steer-by-wire type steering apparatus, since the dynamic power transmission between the steering wheel and the turning wheels is mechanically isolated, it is hard to transmit a road surface reaction force that acts on the turning wheels, to the steering wheel. Accordingly, it is hard for a driver to feel a road surface condition as the steering reaction force on driver's hands (sensation in driver's hands) through the steering wheel.

Hence, for example, a steering control device described in Japanese Patent No. 6107149 computes a feedforward shaft force that is an ideal rack shaft force based on a steering angle and a feedback shaft force that is an estimated shaft force based on state amounts (a lateral acceleration, a turning current and a yaw rate) of a vehicle. The steering control device sets distribution ratios for the feedforward shaft force and the feedback shaft force, depending on a difference between the feedforward shaft force and the feedback shaft force, and computes a final shaft force by summing up values resulting from multiplying the feedforward shaft force and the feedback shaft force by the set distribution ratios. The steering control device controls the reaction motor based on the final shaft force. Since the feedback shaft force reflects a road surface state, the steering reaction force generated by the reaction motor also reflects the road surface state. Accordingly, the driver can feel the road surface state as the steering reaction force.

SUMMARY OF THE INVENTION

The driver feels a clear road surface state or vehicle behavior as the sensation in driver's hands, through the steering wheel, and thereby can perform steering more quickly and accurately. However, as the road surface state or the vehicle behavior, there can be various states. Accordingly, a generation torque (steering reaction force) that is required of the reaction motor can differ depending on a product specification and the like. Therefore, there has been studied a further improvement for more appropriately informing the driver of the road surface state or the vehicle behavior as the steering reaction force (sensation in driver's hands), depending on the product specification and the like.

The invention can give a more appropriate steering reaction force to the driver.

An aspect of the invention is a control device for a steering apparatus. The steering apparatus includes a reaction motor that generates a steering reaction force. The steering reaction force is a torque that is given to a steering shaft and that is in an opposite direction of a steering direction, dynamic force transmission between the steering shaft and a turning shaft being isolated, the turning shaft turning a turning wheel. The control device is configured to control the reaction motor based on a command value that is computed depending on a steering state. The control device includes: a first computation circuit configured to compute a first shaft force based on a state variable that is able to be converted into a rotation angle of a rotation body, the first shaft force being an ideal shaft force that acts on the turning shaft, the rotation body rotating depending on a motion of a steering wheel; a second computation circuit configured to compute a second shaft force based on a state variable that reflects a road surface state or a vehicle behavior, the second shaft force being a force that acts on the turning shaft: and a third computation circuit configured to set a limit value with reference to the second shaft force, the limit value being a value that limits a variation range of the first shaft force. The third computation circuit is configured to compute a final shaft force using the limit value, through execution of a limiting process by which the first shaft force is limited, the final shaft force being reflected in the command value.

For example, in the case where oversteer has occurred in a vehicle, an operation position (referred to as a "zero point of a shaft force", hereinafter) of the steering wheel at which the shaft force is zero changes to a position deviated from a neutral position corresponding to a straight movement state of the vehicle. The first shaft force merely depends on the state variable that is able to be converted into the rotation angle of the rotation body that rotates depending on the motion of the steering wheel. Therefore, the zero point of the first shaft force is always the neutral position corresponding to the straight movement state of the vehicle, regardless of whether the oversteer has occurred in the vehicle. That is, in the case where the oversteer has occurred in the vehicle, a gap is generated between the actual zero point of the shaft force and the zero point of the first shaft force. Therefore, in the case where the oversteer has occurred in the vehicle, when the first shaft force is reflected in the command value for the reaction motor, there is a fear that the driver has a strangeness feeling due to the gap between the actual zero point of the shaft force and the zero point of the first shaft force. For example, in the case where the oversteer has occurred in the vehicle, it is possible that the driver resolves the oversteer by performing countersteer. However, the driver cannot feel the actual zero point of the shaft force as a sensation in driver's hands, and therefore, there is a concern that the driver cannot perform the countersteer at an appropriate timing.

In this respect, with the above configuration, since the variation range of the first shaft force is limited by the limit value set with reference to the second shaft force, it is possible to bring the zero point of the first shaft force close to the zero point of the second shaft force, that is, the actual zero point of the shaft force. The reason is shown as follows. That is, in the case where the oversteer has occurred in the vehicle, the zero point of the second shaft force also changes to a position deviated from the neutral position of the steering wheel, because the road surface state or the vehicle behavior is reflected in the second shaft force. Then, in the case where the zero point of the second shaft force has been deviated from the neutral position of the steering wheel, the first shaft force is limited to the limit value set with reference to the second shaft force having the deviated zero point. Therefore, the zero point of the first shaft force is moved in a direction of the deviation of the zero point of the second shaft force from the neutral position of the steering wheel. That is, the gap between the actual zero point of the shaft force and the zero point of the first shaft force decreases depending on the limit value. Accordingly, the final shaft force based on the first shaft force limited to the limit value is reflected in the command value for the reaction motor, and thereby it is possible to restrain the strangeness feeling that is given to the driver. In the case where the oversteer has occurred in the vehicle, the driver can feel the zero point of the final shaft force that is nearer to the actual zero point of the shaft force, as the sensation in driver's hands through the steering wheel, and thereby can perform the countersteer at an appropriate timing.

In the control device for the steering apparatus, the third computation circuit may be configured to compute a shaft force that is of the first shaft force after the limiting process and the second shaft force and that has a smaller absolute value, as the final shaft force.

The road surface state is reflected in the second shaft force. Therefore, for example, in the case where stationary steering is performed, the value of the second shaft force can rapidly increase. In the case where the second shaft force is reflected in the command value for the reaction motor, there is a fear that the steering reaction force that the driver feels through the steering wheel becomes excessively large. In this respect, with the above configuration, in the case where the absolute value of the second shaft force is larger than the absolute value of the first shaft force, the first shaft force is reflected in the command value for the reaction motor, as the final shaft force. Thereby, the steering reaction force is restrained from becoming excessively large.

For example, in the case where the vehicle is traveling on a low-friction road, the second shaft force can be a smaller value. Further, in the case where the vehicle is traveling on the low-friction road, it is desirable to appropriately inform the driver of the road surface state. The first shaft force merely depends on the state variable that is able to be converted into the rotation angle of the rotation body that rotates depending on the motion of the steering wheel. Therefore, in the case where the first shaft force is reflected in the command value for the reaction motor as the final shaft force, there is a fear that it is not possible to appropriately inform the driver of the road surface state as the steering reaction force. In this respect, with the above steering control device, in the case where the absolute value of the second shaft force is smaller than the absolute value of the first shaft force, the second shaft force is reflected in the command value for the reaction motor, as the final shaft force. Thereby, the driver feels the smaller steering reaction force corresponding to the second shaft force, as the sensation in driver's hands, and thereby can recognize that the vehicle is traveling on the low-friction road.

In the control device for the steering apparatus, the third computation circuit may be configured to compute the first shaft force after the limiting process, as the final shaft force. With the above configuration, in both of the case where the absolute value of the second shaft force is larger than the absolute value of the first shaft force and the case where the absolute value of the second shaft force is smaller than the absolute value of the first shaft, the first shaft force after the limiting process is reflected in the command value for the reaction motor, as the final shaft force. This also restrains the steering reaction force from becoming excessively large. Further, for example, in the case where the vehicle is traveling on the low-friction road, the driver can feel the smaller steering reaction force, as the sensation in driver's hands.

In the control device for the steering apparatus, the third computation circuit may be configured to adjust the limit value depending on a vehicle speed. With the above configuration, it is possible to optimize the limit value depending on the vehicle speed.

In the control device for the steering apparatus, the third computation circuit may be configured to adjust the limit value depending on a difference value between the first shaft force and the second shaft force. With the above configuration, it is possible to optimize the limit value depending on the difference value between the first shaft force and the second shaft force.

In the control device for the steering apparatus, the second computation circuit may be configured to compute the second shaft force, based on the value of an electric current that is supplied to a turning motor, as the state variable, the turning motor being a generation source of a turning force that is given to the turning shaft.

The road surface state or the vehicle behavior is reflected in the value of the electric current that is supplied to the turning motor. Therefore, from a standpoint of the generation of the steering reaction force by the reaction motor depending on the road surface state or the vehicle behavior, the second shaft force computed based on the value of the electric current that is supplied to the turning motor is suitable for the computation of the command value for the reaction motor.

With the steering control device in the invention, it is possible to give a more appropriate steering reaction force to the driver.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a configuration diagram of a steer-by-wire type steering apparatus that is equipped with a first embodiment of a steering control device;
FIG. 2 is a control block diagram of the first embodiment of the steering control device;
FIG. 3 is a control block diagram of a steering reaction force command value computation unit in the first embodiment;
FIG. 4 is a control block diagram showing an example of a shaft force computation unit in the first embodiment;
FIG. 5A is an example of a graph showing a relation between a steer angle and a shaft force when oversteer has not occurred in a vehicle in the first embodiment;
FIG. 5B is an example of a graph showing the relation between the steer angle and the shaft force when the oversteer has not occurred in the vehicle in the first embodiment;
FIG. 5C is a graph showing the relation between the steer angle and the shaft force when the oversteer has occurred in the vehicle in the first embodiment;
FIG. 6 is a control block diagram of the shaft force computation unit in the first embodiment;
FIG. 7A is an example of a graph showing the relation between the steer angle and the shaft force when the oversteer has not occurred in the vehicle in the first embodiment;
FIG. 7B is an example of a graph showing the relation between the steer angle and the shaft force when the oversteer has not occurred in the vehicle in the first embodiment;
FIG. 7C is an example of a graph showing the relation between the steer angle and the shaft force when the oversteer has not occurred in the vehicle in the first embodiment;
FIG. 7D is a graph showing the relation between the steer angle and the shaft force when the oversteer occurred in the vehicle in the first embodiment;
FIG. 8 is a control block diagram of a shaft force computation unit in a second embodiment;
FIG. 9A is an example of a graph showing the relation between the steer angle and the shaft force when the oversteer has not occurred in the vehicle in the second embodiment;
FIG. 9B is an example of a graph showing the relation between the steer angle and the shaft force when the oversteer has not occurred in the vehicle in the second embodiment;
FIG. 9C is a graph showing the relation between the steer angle and the shaft force when the oversteer has occurred in the vehicle in the second embodiment;
FIG. 10 is a control block diagram of a shaft force computation unit in a third embodiment; and
FIG. 11 is a graph showing a hysteresis characteristic of an estimated shaft force with respect to the steer angle in the third embodiment.

DETAILED DESCRIPTION OF EMBODIMENTS

A first embodiment in which a steering control device is applied to a steer-by-wire type steering apparatus will be described below.

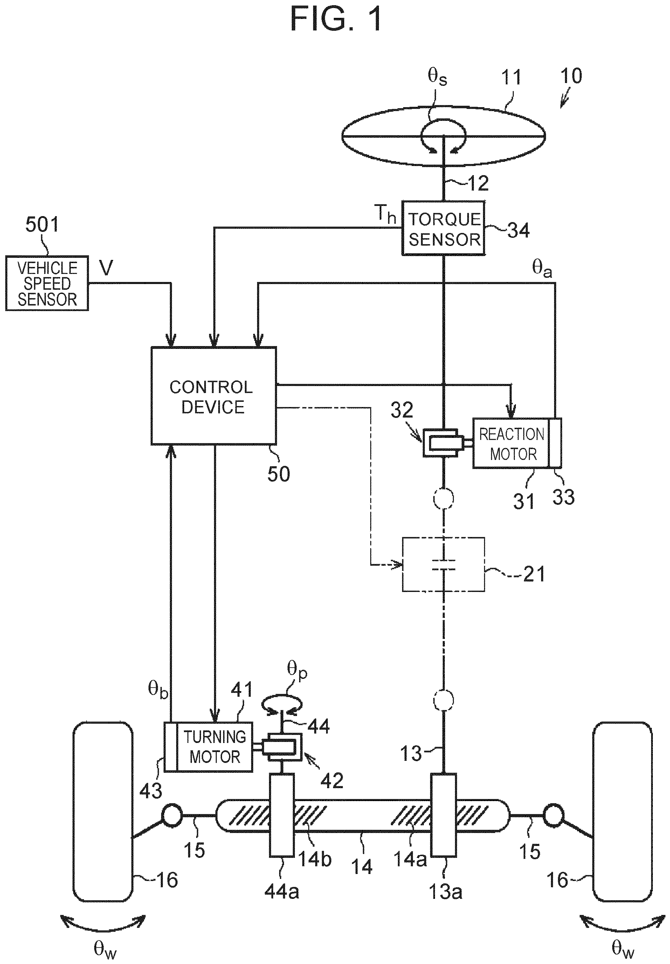

As shown in FIG. 1, a steering apparatus 10 of a vehicle includes a steering shaft 12 that is coupled to a steering wheel 11. Further, the steering apparatus 10 includes a turning shaft 14 that extends along a vehicle width direction (a right-left direction in FIG. 1). Right and left turning wheels 16 are coupled to both ends of the turning shaft 14 through tie rods 15, respectively. A turning angle $\theta_w$ of the turning wheels 16 is altered by a linear motion of the turning shaft 14. The steering shaft 12 and the turning shaft 14 constitute a steering mechanism of the vehicle.

The steering apparatus 10 includes a reaction motor 31, a speed reducer 32, a rotation angle sensor 33 and a torque sensor 34, as a configuration for generating a steering reaction force. Incidentally, the steering reaction force is a force (torque) that acts in an opposite direction of a direction of driver's operation of the steering wheel 11. By giving the steering reaction force to the steering wheel 11, it is possible to give a moderate sensation in driver's hands.

The reaction motor 31 is a generation source of the steering reaction force. As the reaction motor 31, for example, a brushless motor having three phases (U, V and W) is employed. The reaction motor 31 (a rotation shaft of the reaction motor 31, to be exact) is coupled to the steering shaft 12 through the speed reducer 32. The torque of the reaction motor 31 is given to the steering shaft 12 as the steering reaction force.

The rotation angle sensor 33 is provided on the reaction motor 31. The rotation angle sensor 33 detects a rotation angle $\theta_a$ of the reaction motor 31. The rotation

angle $\theta_a$ of the reaction motor 31 is used for the computation of a steer angle (steering angle) $\theta_s$. The reaction motor 31 and the steering shaft 12 interlock with each other through the speed reducer 32. Therefore, the rotation angle $\theta_a$ of the reaction motor 31 has a correlation with the rotation angle of the steering shaft 12 and furthermore the steer angle $\theta_s$ that is the rotation angle of the steering wheel 11. Accordingly, it is possible to evaluate the steer angle $\theta_s$ based on the rotation angle $\theta_a$ of the reaction motor 31.

The torque sensor 34 detects a steering torque $T_h$ that is applied to the steering shaft 12 by a rotation operation of the steering wheel 11. The torque sensor 34 is provided at a portion that is on the steering shaft 12 and that is closer to the steering wheel 11 than the speed reducer 32 is.

The steering apparatus 10 includes a turning motor 41, a speed reducer 42 and a rotation angle sensor 43, as a configuration for generating a turning force that is a dynamic force for turning the turning wheels 16.

The turning motor 41 is a generation source of the turning force. As the turning motor 41, for example, a brushless motor having three phases is employed. The turning motor 41 (a rotation shaft of the turning motor 41, to be exact) is coupled to a pinion shaft 44 through the speed reducer 42. A pinion gear 44a of the pinion shaft 44 engages with a rack gear 14b of the turning shaft 14. The torque of the turning motor 41 is given to the turning shaft 14 through the pinion shaft 44, as the turning force. With the rotation of the turning motor 41, the turning shaft 14 moves along the vehicle width direction (the right-left direction in the figure).

The rotation angle sensor 43 is provided on the turning motor 41. The rotation angle sensor 43 detects a rotation angle $\theta_b$ of the turning motor 41. Incidentally, the steering apparatus 10 includes a pinion shaft 13. The pinion shaft 13 is provided so as to cross the turning shaft 14. A pinion gear 13a of the pinion shaft 13 engages with a rack gear 14a of the turning shaft 14. The reason why the pinion shaft 13 is provided is that the pinion shaft 13 supports the turning shaft 14 within a housing (not illustrated) together with the pinion shaft 44. That is, by a support mechanism (not illustrated) provided in the steering apparatus 10, the turning shaft 14 is supported such that the turning shaft 14 can move along an axial direction of the turning shaft 14, and is pressed toward the pinion shafts 13, 44. Thereby, the turning shaft 14 is supported within the housing. However, there may be provided another support mechanism that supports the turning shaft 14 within the housing without using the pinion shaft 13.

The steering apparatus 10 includes a control device 50. The control device 50 controls the reaction motor 31 and the turning motor 41, based on detection results of various sensors. As the sensors, there is a vehicle speed sensor 501, in addition to the above-described rotation angle sensor 33, torque sensor 34 and rotation angle sensor 43. The vehicle speed sensor 501 is provided in the vehicle, and detects a vehicle speed V that is the traveling speed of the vehicle.

The control device 50 executes a reaction force control to generate the steering reaction force corresponding to the steering torque $T_h$, through a drive control of the reaction motor 31. The control device 50 computes a target steering reaction force based on the steering torque $T_h$ and the vehicle speed V, and computes a target steering angle of the steering wheel 11 based on the computed target steering reaction force, the steering torque $T_h$ and the vehicle speed V. The control device 50 computes a steer angle correction amount through a feedback control of the steer angle $\theta_s$ that is executed such that the actual steer angle $\theta_s$ follows up the target steer angle, and computes a steering reaction force command value by adding the computed steer angle correction amount to the target steering reaction force. The control device 50 supplies an electric current necessary to generate the steering reaction force corresponding to the steering reaction force command value, to the reaction motor 31.

The control device 50 executes a turning control to turn the turning wheels 16 depending on a steering state, through a drive control of the turning motor 41. The control device 50 computes a pinion angle $\theta_p$ that is the actual rotation angle of the pinion shaft 44, based on the rotation angle $\theta_b$ of the turning motor 41 that is detected through the rotation angle sensor 43. The pinion angle $\theta_p$ is a value that reflects the turning angle $\theta_w$ of the turning wheels 16. The control device 50 computes a target pinion angle, using the above-described target steering angle. Then, the control device 50 evaluates the deviation between the target pinion angle and the actual pinion angle $\theta_p$, and controls electricity supply for the turning motor 41 such that the deviation is eliminated.

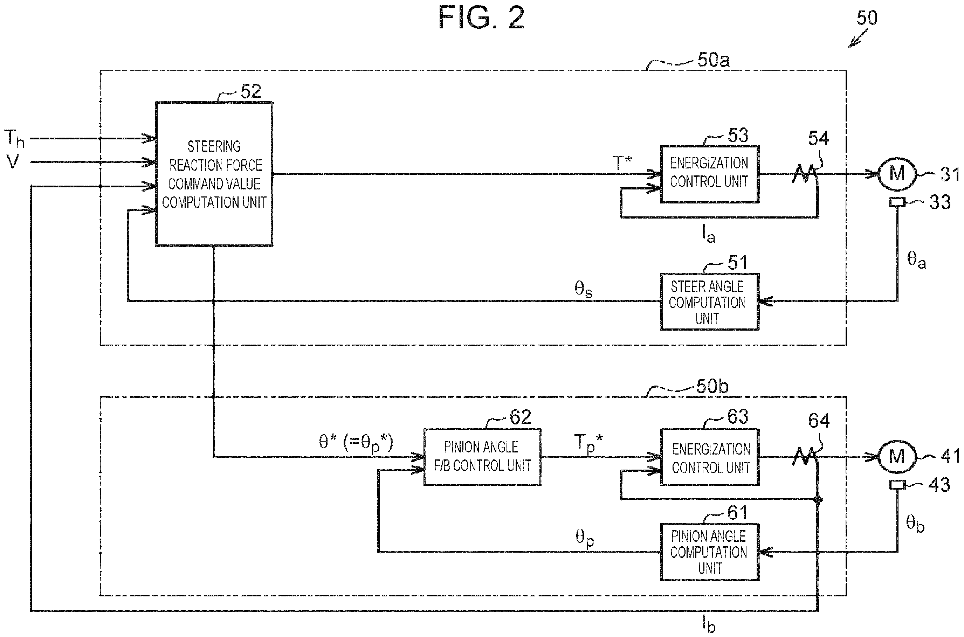

Next, the control device 50 will be described in detail. As shown in FIG. 2, the control device 50 includes a reaction force control unit 50a that executes the reaction force control, and a turning control unit 50b that executes the turning control.

The reaction force control unit 50a includes a steer angle computation unit 51, a steering reaction force command value computation unit 52 and an energization control unit 53.

The steer angle computation unit 51 computes the steer angle $\theta_s$ of the steering wheel 11, based on the rotation angle $\theta_a$ of the reaction motor 31 that is detected through the rotation angle sensor 33. The steering reaction force command value computation unit 52 computes a steering reaction force command value $T^*$ based on the steering torque $T_h$, the vehicle speed V and the steer angle $\theta_s$. The steering reaction force command value computation unit 52 computes the steering reaction force command value $T^*$ having a larger absolute value, as the absolute value of the steering torque $T_h$ is larger and the vehicle speed V is lower. Incidentally, the steering reaction force command value computation unit 52 computes the target steer angle $\theta^*$ of the steering wheel 11 in the course of the computation of the steering reaction force command value T*. The steering reaction force command value computation unit 52 will be described later in detail.

The energization control unit 53 supplies an electric power corresponding to the steering reaction force command value T*, to the reaction motor 31. Specifically, the energization control unit 53 computes a current command value for the reaction motor 31, based on the steering reaction force command value T*. Further, the energization control unit 53 detects the value of an actual electric current $I_a$ that is generated in an electricity supply path to the reaction motor 31, through a current sensor 54 provided on the electricity supply path. The value of the electric current $I_a$ is the value of the actual electric current that is supplied to the reaction motor 31. Then, the energization control unit 53 evaluates the deviation between the current command value and the value of the actual electric current $I_a$, and controls electricity supply for the reaction motor 31 such that the deviation is eliminated (a feedback control of the electric current $I_a$). Thereby, the reaction motor 31 generates the torque corresponding to the steering reaction force command value T*. It is possible to give a moderate sensation in driver's hands that corresponds to a road surface reaction force.

The turning control unit 50b includes a pinion angle computation unit 61, a pinion angle feedback control unit 62 and an energization control unit 63.

The pinion angle computation unit 61 computes the pinion angle $\theta_p$ that is the actual rotation angle of the pinion shaft 44, based on the rotation angle $\theta_b$ of the turning motor 41 that is detected through the rotation angle sensor 43. The turning motor 41 and the pinion shaft 44 interlock with each other through the speed reducer 42. Therefore, there is a correlation between the rotation angle $\theta_b$ of the turning motor 41 and the pinion angle $\theta_p$. By using this correlation, it is possible to evaluate the pinion angle $\theta_p$ from the rotation angle $\theta_b$ of the turning motor 41. Further, the pinion shaft 44 engages with the turning shaft 14. Therefore, there is a correlation between the pinion angle $\theta_p$ and the moving amount of the turning shaft 14. That is, the pinion angle $\theta_p$ is a value that reflects the turning angle $\theta_w$ of the turning wheels 16.

The pinion angle feedback control unit 62 takes in the target steer angle $\theta^*$ computed by the steering reaction force command value computation unit 52, as a target pinion angle $\theta_p{}^*$. Further, the pinion angle feedback control unit 62 takes in the actual pinion angle $\theta_p$ computed by the pinion angle computation unit 61. The pinion angle feedback control unit 62 computes a pinion angle command value $T_p{}^*$, through a feedback control (PID control) of the pinion angle $\theta_p$, such that the actual pinion angle $\theta_p$ follows up the target pinion angle $\theta_p{}^*$ (which is equal to the target steer angle $\theta^*$ in the embodiment).

The energization control unit 63 supplies an electric power corresponding to the pinion angle command value $T_p{}^*$, to the turning motor 41. Specifically, the energization control unit 63 computes a current command value for the turning motor 41, based on the pinion angle command value $T_p{}^*$. Further, the energization control unit 63 detects the value of an actual electric current $I_b$ that is generated in an electricity supply path to the turning motor 41, through a current sensor 64 provided on the electricity supply path. The value of the electric current $I_b$ is the value of the actual electric current that is supplied to the turning motor 41. Then, the energization control unit 63 evaluates the deviation between the current command value and the value of the actual electric current $I_b$, and controls the electricity supply for the turning motor 41 such that the deviation is eliminated (a feedback control of the electric current $I_b$). Thereby, the turning motor 41 rotates by an angle corresponding to the pinion angle command value $T_p{}^*$.

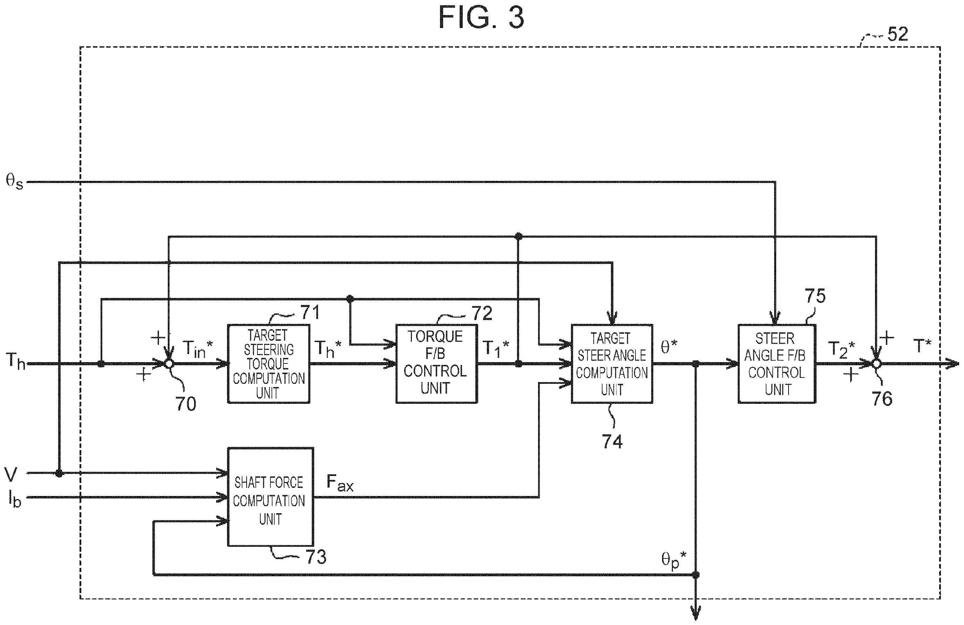

Next, the steering reaction force command value computation unit 52 will be described in detail. As shown in FIG. 3, the steering reaction force command value computation unit 52 includes an adder 70, a target steering torque computation unit 71, a torque feedback control unit 72, a shaft force computation unit 73, a target steer angle computation unit 74, a steer angle feedback control unit 75 and an adder 76.

The adder 70 computes an input torque Tin* as a torque that is applied to the steering shaft 12, by adding the steering torque $T_h$ detected through the torque sensor 34 and a first steering reaction force command value $T_1{}^*$ computed by the torque feedback control unit 72.

The target steering torque computation unit 71 computes a target steering torque $T_h{}^*$ based on the input torque $T_{in}{}^*$ computed by the adder 70. The target steering torque $T_h{}^*$ is a target value of the steering torque $T_h$ that needs to be applied to the steering wheel 11. The target steering torque computation unit 71 computes the target steering torque $T_h{}^*$ having a larger absolute value, as the absolute value of the input torque $T_{in}{}^*$ is larger.

The torque feedback control unit 72 takes in the steering torque $T_h$ detected through the torque sensor 34 and the target steering torque $T_h{}^*$ computed by the target steering torque computation unit 71. The torque feedback control unit 72 computes the first steering reaction force command value $T_1{}^*$ through a feedback control (PID control) of the steering torque $T_h$, such that the steering torque $T_h$ detected through the torque sensor 34 follows up the target steering torque $T_h{}^*$.

The shaft force computation unit 73 takes in the target steer angle $\theta^*$ computed by the target steer angle computation unit 74, as the target pinion angle $\theta_p{}^*$. Further, the shaft force computation unit 73 takes in the value of the electric current $I_b$ of the turning motor 41 detected through the current sensor 64 and the vehicle speed V detected through the vehicle speed sensor 501. The shaft force computation unit 73 computes a shaft force $F_{ax}$ that acts on the turning shaft 14 through the turning wheels 16, based on the target pinion angle $\theta_p{}^*$, the value of the electric current $I_b$ of the turning motor 41 and the vehicle speed V. The shaft force computation unit 73 will be described later in detail.

The target steer angle computation unit 74 takes in the steering torque $T_h$ detected through the torque sensor 34, the first steering reaction force command value $T_1^*$ computed by the torque feedback control unit 72, the shaft force $F_{ax}$ computed by the shaft force computation unit 73, and the vehicle speed V detected through the vehicle speed sensor 501. The target steer angle computation unit 74 computes the target steer angle $\theta^*$ of the steering wheel 11, based on the taken steering torque $T_h$, first steering reaction force command value $T_1^*$, shaft force $F_{ax}$ and vehicle speed V. Details are shown as follows.

The target steer angle computation unit 74 evaluates the final input torque Tin* for the steering wheel 11, by subtracting a torque conversion value (a steering reaction force corresponding to the shaft force) resulting from converting the shaft force $F_{ax}$ into a torque from the input torque Tin* that is the total of the first steering reaction force command value $T_1^*$ and the steering torque $T_h$. The target steer angle computation unit 74 computes the target steer angle $\theta^*$ (target steering angle) from the final input torque $T_{in}^*$, based on an ideal model expressed by the following Expression (A). For the ideal model, the steer angle (steering angle) of the steering wheel 11 corresponding to an ideal turning angle depending on the input torque $T_{in}^*$ is previously modeled by an experiment or the like, on the premise of a steering apparatus in which the steering wheel 11 and the turning wheels 16 are mechanically coupled.

$$T_{in}^* = J\theta^{*\prime\prime} + C\theta^{*\prime} + K\theta^* \ ... \ (A)$$

where "J" is an inertia coefficient corresponding to an inertia moment of the steering wheel 11 and the steering shaft 12, "C" is a viscosity coefficient (friction coefficient) corresponding to the friction and the like between the turning shaft 14 and the housing, and "K" is a spring modulus when each of the steering wheel 11 and the steering shaft 12 is regarded as a spring. The viscosity coefficient C and the inertia coefficient J are values depending on the vehicle speed V. Further, "$\theta^{*\prime\prime}$" is a second-order temporal differentiation value of the target steer angle $\theta^*$, and "$\theta^{*\prime}$" is a first-order temporal differentiation value of the target steer angle $\theta^*$.

The steer angle feedback control unit 75 takes in the steer angle $\theta_s$ computed by the steer angle computation unit 51 and the target steer angle $\theta^*$ computed by the target steer angle computation unit 74. The steer angle feedback control unit 75 computes a second steering reaction force command value $T_2^*$ through the feedback control of the steer angle $\theta_s$, such that the actual steer angle $\theta_s$ computed by the steer angle computation unit 51 follows up the target steer angle $\theta^*$.

The adder 76 takes in the first steering reaction force command value $T_1^*$ computed by the torque feedback control unit 72 and the second steering reaction force command value $T_2^*$ computed by the steer angle feedback control unit 75. The adder 76 computes the steering reaction force command value $T^*$ by adding the first steering reaction force command value $T_1^*$ and the second steering reaction force command value $T_2^*$.

Next, the shaft force computation unit 73 will be described in detail. As the shaft force computation unit 73, the following configuration can be employed depending on a product specification and the like.

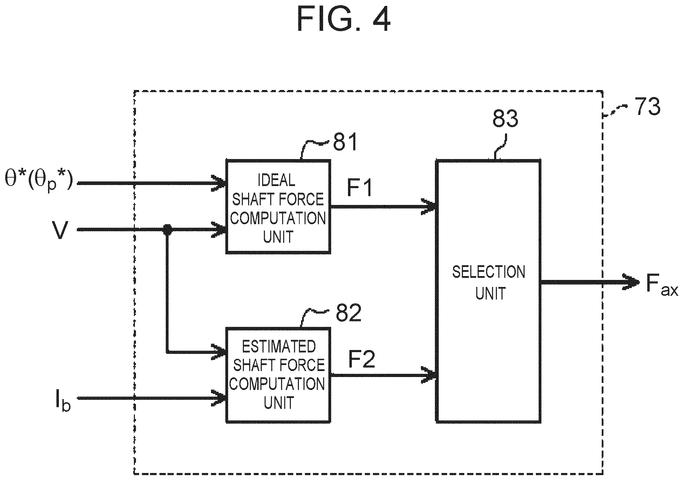

As shown in FIG. 4, the shaft force computation unit 73 includes an ideal shaft force computation unit 81, an estimated shaft force computation unit 82 and a selection unit 83. Based on the target pinion angle $\theta_p^*$, the ideal shaft force computation unit 81 computes an ideal shaft force F1 that is an ideal value of the shaft force that acts on the turning shaft 14 through the turning wheels 16. The ideal shaft force computation unit 81 computes the ideal shaft force F1, using an ideal shaft force map stored in an unillustrated storage device of the control device 50. The ideal shaft force F1 is set to a value having a larger absolute value, as the absolute value of the target pinion angle $\theta_p^*$ (or a target turning angle obtained by multiplying the target pinion angle $\theta_p^*$ by a predetermined conversion factor) increases and the vehicle speed V is lower. Since the ideal shaft force F1 is computed based on the target pinion angle $\theta_p^*$, it is hard for the ideal shaft force F1 to reflect a road surface state. In the computation of the ideal shaft force F1, it is not always necessary to consider the vehicle speed V.

Based on the value of the electric current $I_b$ of the turning motor 41, the estimated shaft force computation unit 82 computes an estimated shaft force F2 that is an estimated value of the shaft force that acts on the turning shaft 14. A disturbance corresponding to a road surface state (the frictional resistance of the road surface) acts on the turning wheels 16, and thereby the difference between the target pinion angle $\theta_p^*$ and the actual pinion angle $\theta_p$ is generated, so that the value of the electric current $I_b$ of the turning motor 41 changes. That is, the value of the electric current $I_b$ of the turning motor 41 reflects the actual road surface reaction force that acts on the turning wheels 16. Therefore, it is possible to compute the shaft force that reflects the influence of the road surface state, based on the value of the electric current $I_b$ of the turning motor 41. The estimated shaft force F2 is evaluated by multiplying the value of the electric current $I_b$ of the turning motor 41 by a gain that is a coefficient depending on the vehicle speed V.

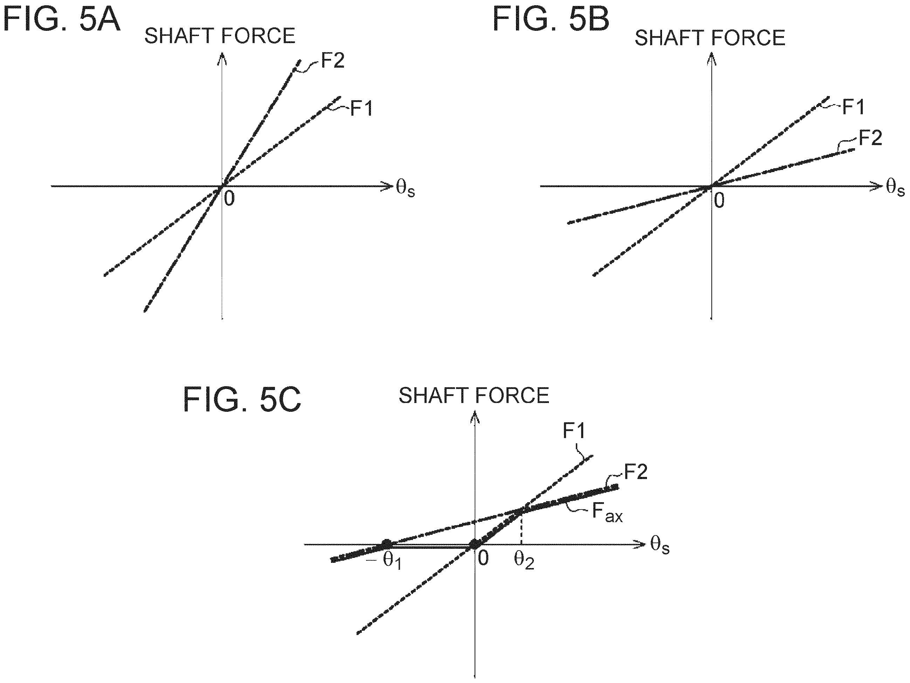

The selection unit 83 sets the final shaft force $F_{ax}$ through comparison between the ideal shaft force F1 and the estimated shaft force F2. Details are shown as follows. When the absolute value of the estimated shaft force F2 is a larger value than the absolute value of the ideal shaft force F1 as shown in a graph of FIG. 5A, the selection unit 83 sets the ideal shaft force F1 as the final shaft force $F_{ax}$. This is based on a standpoint of securement of operability of the steering wheel 11. That is, since the shaft force $F_{ax}$ is reflected in the torque that is generated by the reaction motor 31, the torque that is generated by the reaction motor 31 becomes a larger value as the value of the shaft force $F_{ax}$ becomes larger. For example, at the time of parking or garaging, stationary steering in which the steering wheel 11 is largely operated in a vehicle stop state is sometimes performed. In this case, the shaft force $F_{ax}$ and furthermore the steering reaction force generated by the reaction motor 31 are likely to become very large values, and therefore, there is a concern that the sensation in driver's hands through the steering wheel 11 becomes excessively heavy. Therefore, when the absolute value of the estimated shaft force F2 is a larger value than the absolute value of the ideal shaft force F1 that is the ideal shaft force corresponding to the target pinion angle $\theta_\rho{}^*$, it is desirable to set the ideal shaft force F1 as the final shaft force $F_{ax}$.

When the absolute value of the estimated shaft force F2 is a smaller value than the absolute value of the ideal shaft force F1 as shown in FIG. 5B, the selection unit 83 sets the estimated shaft force F2 as the final shaft force $F_{ax}$. This is based on a standpoint of more appropriately informing the driver of the road surface state as the steering reaction force. For example, when the vehicle is traveling on a low-friction road such as a wet road or a snow road, the ideal shaft force F1 becomes a value corresponding to the target pinion angle $\theta_\rho{}^*$, regardless of the grip state of a tire. On the other hand, the value of the estimated shaft force F2 decreases with the decrease in road surface grip. Accordingly, when the absolute value of the estimated shaft force F2 is a smaller value than the absolute value of the ideal shaft force F1 that is the ideal shaft force corresponding to the target pinion angle $\theta_\rho{}^*$, it is desirable to set the estimated shaft force F2 as the final shaft force $F_{ax}$, for example, for informing the driver of the decrease in road surface grip as the steering reaction force.

In this way, the final shaft force $F_{ax}$ is set so as to switch between the ideal shaft force F1 and the estimated shaft force F2, through the comparison between the ideal shaft force F1 and the estimated shaft force F2. Thereby, it is possible to secure the operability of the steering wheel 11, and to give a more appropriate steering reaction force corresponding to the road surface state to the driver as the sensation in driver's hands.

However, in the case where the configuration of using the ideal shaft force F1 and the estimated shaft force F2 with switching is employed as the shaft force computation unit 73, there is a concern described below. For example, when oversteer has occurred in the vehicle, there is a fear that the driver has a strangeness feeling due to change in the change characteristic of the estimated shaft force F2 with respect to the steer angle $\theta_s$. Incidentally, the oversteer is a turning characteristic in which rear wheels sideslip and the turning radius of the vehicle decreases, because ground friction forces of the rear wheels become below a centrifugal force, when the vehicle speed increases during ordinary circle turning of the vehicle.

As shown by a one-dot chain line in a graph of FIG. 5C, when the oversteer has occurred in the vehicle, a characteristic line indicating the change characteristic of the estimated shaft force F2 with respect to the steer angle $\theta_s$ is offset (parallelly moved) in a positive direction or a negative direction along the ordinate axis relative to the origin. By this offset, the steer angle $\theta_s$ (that is, a zero point of the estimated shaft force F2) at which the estimated shaft force F2 is "0" is moved in a positive direction or a negative direction relative to the steer angle $\theta_s$ (that is, $\theta_s = 0°$) corresponding to a neutral position of the steering wheel 11 in a straight movement state of the vehicle.

FIG. 5C illustrates only the case where the characteristic line indicating the estimated shaft force F2 is offset in the positive direction. In this case, the steer angle $\theta_s$ at which the value of the estimated shaft force F2 is "0" changes from 0°, which is the steer angle $\theta_s$ corresponding to the neutral position of the steering wheel 11, to a negative angle $—\theta_1$. Therefore, the final shaft force $F_{ax}$ changes along a polygonal line with respect to the steer angle $\theta_s$.

That is, when the absolute value of the steer angle $\theta_s$ is equal to or larger than the absolute value of the angle $—\theta_1$, the estimated shaft force F2 is set as the final shaft force $F_{ax}$. This is because the absolute value of the estimated shaft force F2 is smaller than the absolute value of the ideal shaft force F1. Further, when the absolute value of the steer angle $\theta_s$ is smaller than the absolute value of the angle $—\theta_1$ and is equal to or larger than 0°, "0" is set as the final shaft force $F_{ax}$. This is because the zero point of the estimated shaft force F2 is offset by the angle $—\theta_1$ in the negative direction relative to 0°, which is the steer angle $\theta_s$ corresponding to the neutral position of the steering wheel 11.

When the absolute value of the steer angle $\theta_s$ is equal to or smaller than the absolute value of an angle $\theta_2$, the ideal shaft force F1 is selected as the final shaft force $F_{ax}$. This is because the absolute value of the ideal shaft force F1 is smaller than the absolute value of the estimated shaft force F2. Further, when the absolute value of the steer angle $\theta_s$ is exceeding the angle $\theta_2$, the estimated shaft force F2 is set as the final shaft force $F_{ax}$. This is because the absolute value of the estimated shaft force F2 is smaller than the absolute value of the ideal shaft force F1.

When the oversteer has occurred in the vehicle, it is possible that the driver tries to resolve the oversteer by performing so-called countersteer. At this time, the driver operates the steering wheel 11 in a reverse direction of a movement direction of the vehicle, relative to a steer angle position at which the steering reaction force is "0". However, as shown in the graph of FIG. 5C, when the oversteer has occurred in the vehicle, the actual steer angle position ($\theta_s = —\theta_1$) at which the estimated shaft force F2 is "0" is deviated from the steer angle position ($\theta_s = 0°$) at which the steering reaction force that the driver feels as the sensation in driver's hands is "0". The driver cannot feel the steering reaction force corresponding to the actual shaft force, as the sensation in driver's hands, and therefore, there is a fear that the driver cannot perform the countersteer at an appropriate timing.

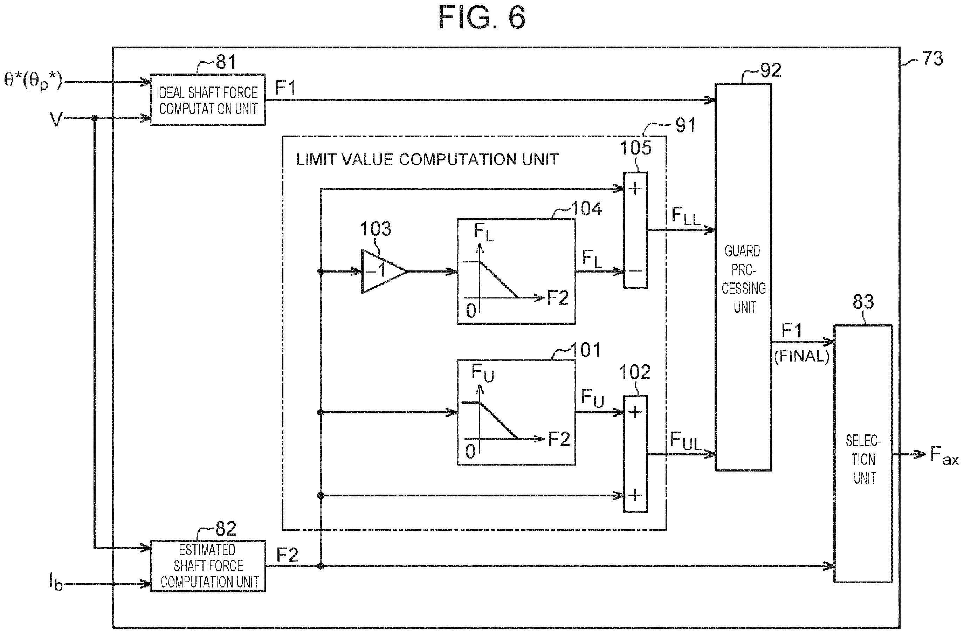

Hence, in the embodiment, the following configuration is employed as the shaft force computation unit 73. As shown in FIG. 6, the shaft force computation unit 73 includes a limit value computation unit 91 and a guard processing unit 92, in addition to the above-described ideal shaft force computation unit 81, estimated shaft force computation unit 82 and selection unit 83.

The limit value computation unit 91 computes an upper limit value $F_{UL}$ and a lower limit value $F_{LL}$ as limit values of the ideal shaft force F1 that is computed by the ideal shaft force computation unit 81, using the estimated shaft force F2 that is computed by the estimated shaft force computation unit 82. The limit value computation unit 91 includes an upper limit width computation unit 101, an adder 102, a multiplier 103, a lower limit width computation unit 104 and a subtractor 105.

The upper limit width computation unit 101 computes an upper limit width $F_U$ of the ideal shaft force F1 depending on the estimated shaft force F2. The upper limit width computation unit 101 computes the upper limit width $F_U$ using an upper limit map that specifies a relation between the estimated shaft force F2 and the upper limit width $F_U$. The upper limit map is a map in which an abscissa axis indicates the steer angle $\theta_s$ and an ordinate axis indicates the upper limit width Fu, and is set from a standpoint of restricting change in the ideal shaft force F1 in a direction of increase in a slope that is the increase rate of the absolute value of the ideal shaft force F1 with respect to increase in the absolute value of the steer angle $\theta_s$ and permitting change in the ideal shaft force F1 in a direction of decrease in the slope. The upper limit map has the following characteristic. That is, in the case where the estimated shaft force F2 is a negative value, the upper limit width Fu is maintained at a positive constant value. In the case where the estimated shaft force F2 is a positive value, the upper limit width Fu gradually decreases as the absolute value of the estimated shaft force F2 increases, and then reaches "0".

The adder 102 computes the upper limit value $F_{UL}$ of the ideal shaft force F1, by adding the estimated shaft force F2 computed by the estimated shaft force computation unit 82 and the upper limit width Fu computed by the upper limit width computation unit 101.

The multiplier 103 inverts the sign (+, -) of the estimated shaft force F2 computed by the estimated shaft force computation unit 82. Specifically, the multiplier 103 multiplies the estimated shaft force F2 computed by the estimated shaft force computation unit 82 by "-1".

The lower limit width computation unit 104 computes a lower limit width $F_L$ of the ideal shaft force F1 depending on the estimated shaft force F2. The lower limit width computation unit 104 computes the lower limit width $F_L$ using a lower limit map that specifies a relation between the steer angle $\theta_s$ and the lower limit width $F_L$. The lower limit map is a map in which an abscissa axis indicates the estimated shaft force F2 after the sign inversion and an ordinate axis indicates the lower limit width $F_L$. The lower limit map is set from the same standpoint as the above-described upper limit map, and thereby has the following characteristic. That is, in the case where the estimated shaft force F2 after the sign inversion is a negative value, the lower limit width $F_L$ is maintained at a positive constant value. In the case where the estimated shaft force F2 after the sign inversion is a positive value, the lower limit width $F_L$ gradually decreases as the absolute value of the estimated shaft force F2 after the sign inversion increases, and then reaches "0".

The subtractor 105 computes the lower limit value $F_{LL}$ of the ideal shaft force F1 by subtracting the lower limit width $F_L$ computed by the lower limit width computation unit 104 from the estimated shaft force F2 computed by the estimated shaft force computation unit 82.

The guard processing unit 92 executes a limiting process for the ideal shaft force F1, based on the upper limit value $F_{UL}$ and lower limit value $F_{LL}$ computed by the limit value computation unit 91. That is, the guard processing unit 92 compares the value of the ideal shaft force F1 and the upper limit value $F_{UL}$. Further, the guard processing unit 92 compares the value of the ideal shaft force F1 and the lower limit value $F_{LL}$. In the case where the ideal shaft force F1 is exceeding the upper limit value $F_{UL}$, the guard processing unit 92 limits the ideal shaft force F1 to the upper limit value $F_{UL}$. Further, in the case where the ideal shaft force F1 is below the lower limit value $F_{LL}$, the guard processing unit 92 limits the ideal shaft force F1 to the lower limit value $F_{LL}$. The ideal shaft force F1 after the limiting process is set as the final ideal shaft force F1. When the value of the ideal shaft force F1 is a value in a range between the upper limit value $F_{UL}$ and the lower limit value $F_{LL}$, the ideal shaft force F1 computed by the ideal shaft force computation unit 81 is set as the final ideal shaft force F1 with no change.

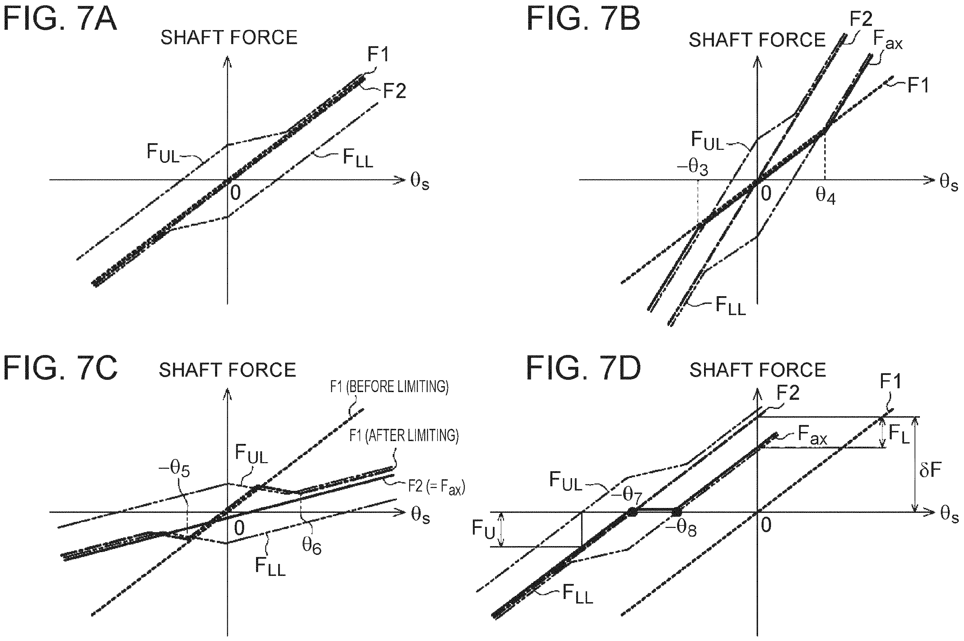

Next, the operation of the first embodiment will be described. As shown in a graph of FIG. 7A, in the case where the vehicle is ordinarily traveling on a dry horizontal paved road and where the oversteer has not occurred in the vehicle, ideally, the change characteristic of the ideal shaft force F1 with respect to the steer angle $\theta_s$ and the change characteristic of the estimated shaft force F2 with respect to the steer angle $\theta_s$ coincide with each other. That is, each of the ideal shaft force F1 and the estimated shaft force F2 changes along a straight line through the origin, with respect to the change in the steer angle $\theta_s$. Each of the upper limit value $F_{UL}$ and the lower limit value $F_{LL}$ is set with reference to the value of the estimated shaft force F2. Since the change characteristic of the ideal shaft force F1 with respect to the steer angle $\theta_s$ and the change characteristic of the estimated shaft force F2 with respect to the steer angle $\theta_s$ coincide with each other, the ideal shaft force F1 is not limited to the upper limit value $F_{UL}$ and the lower limit value $F_{LL}$. The guard processing unit 92 supplies the ideal shaft force F1 computed by the ideal shaft force computation unit 81, to the selection unit 83, as the final ideal shaft force F1, with no change. Basically, the selection unit 83 compares the absolute value of the ideal shaft force F1 and the absolute value of the estimated shaft force F2, and sets the shaft force having the smaller absolute value, as the final shaft force $F_{ax}$. When the absolute value of the ideal shaft force F1 and the absolute value of the estimated shaft force F2 are equal, the selection unit 83 sets one of the ideal shaft force F1 and the estimated shaft force F2 as the final shaft force $F_{ax}$.

As shown in a graph of FIG. 7B, in the case where the oversteer has not occurred in the vehicle, the ideal shaft force F1 and the estimated shaft force F2 respectively change along straight lines through the origin, with respect to the change in the steer angle $\theta_s$. For example, when the stationary steering is performed for parking or garaging, the absolute value of the estimated shaft force F2 is a larger value than the absolute value of the ideal shaft force F1. At this time, since the ideal shaft force F1 is limited by the upper limit value $F_{UL}$ and the lower limit value $F_{LL}$, the final shaft force $F_{ax}$ has the following characteristic.

That is, when the absolute value of the steer angle $\theta_s$ is equal to or larger than the absolute value of an angle $-\theta_3$, the ideal shaft force F1 is limited to the upper limit value $F_{UL}$. Further, in the case where the steer angle $\theta_s$ is a positive value, when the absolute value of the steer angle $\theta_s$ is equal to or larger than the absolute value of an angle $\theta_4$, the ideal shaft force F1 is limited to the lower limit value $F_{LL}$. Therefore, when the absolute value of the steer angle $\theta_s$ is equal to or larger than the absolute value of the angle $-\theta_3$, the ideal shaft force F1 limited to the upper limit value $F_{UL}$ is set as the final shaft force $F_{ax}$. Further, when the absolute value of the steer angle $\theta_s$ is smaller than the absolute value of the angle $-\theta_3$ and is smaller than the angle $\theta_4$, the ideal shaft force F1 computed by the ideal shaft force computation unit 81 is set as the final shaft force $F_{ax}$ with no change. Further, when the absolute value of the steer angle $\theta_s$ is equal to or larger than the absolute value of the angle $\theta_4$, the ideal shaft force F1 limited to the lower limit value $F_{LL}$ is set as the final shaft force $F_{ax}$.

In this way, in the case where the absolute value of the estimated shaft force F2 is a larger value than the absolute value of the ideal shaft force F1, the absolute value of the final shaft force $F_{ax}$ is a smaller value than the absolute value of the estimated shaft force F2, in the whole steer angle range of the steering wheel 11. Therefore, it is possible to restrain the steering reaction force generated by the reaction motor 31 from becoming excessively large, and furthermore to restrain the sensation in driver's hands through the steering wheel 11 from becoming excessively heavy.

As shown in a graph of FIG. 7C, in the case where the oversteer has not occurred in the vehicle, the ideal shaft force F1 and the estimated shaft force F2 respectively change along straight lines through the origin, with respect to the change in the steer angle $\theta_s$. For ex-

ample, in the case where the vehicle is traveling on the low-friction road, the absolute value of the estimated shaft force F2 is a smaller value than the absolute value of the ideal shaft force F1. At this time, since the ideal shaft force F1 is limited by the upper limit value $F_{UL}$ and the lower limit value $F_{LL}$, the final shaft force $F_{ax}$ has the following characteristic.

That is, when the absolute value of the steer angle $\theta_s$ is equal to or larger than the absolute value of a negative angle $-\theta_5$, the ideal shaft force F1 is limited to the lower limit value $F_{LL}$. When the absolute value of the steer angle $\theta_s$ is smaller than the absolute value of the negative angle $-\theta_5$ and is smaller than a positive angle $\theta_6$, the ideal shaft force F1 is a value in the range between the upper limit value $F_{UL}$ and the lower limit value $F_{LL}$, and therefore is not limited. When the absolute value of the steer angle $\theta_s$ is equal to or larger than the absolute value of the positive angle $\theta_6$, the ideal shaft force F1 is limited to the upper limit value $F_{UL}$.

In this way, the absolute value of the estimated shaft force F2 is a smaller value than the absolute value of the ideal shaft force F1 after the limiting process, in the whole steer angle range of the steering wheel 11. Therefore, the estimated shaft force F2 is set as the final shaft force $F_{ax}$, in the whole steer angle range of the steering wheel 11. The value of the estimated shaft force F2 decreases, for example, with the decrease in road surface grip, and therefore it is possible to inform the driver of the decrease in road surface grip, as the steering reaction force.

As shown by a one-dot chain line in a graph of FIG. 7D, in the case where the oversteer has occurred in the vehicle, a characteristic line indicating the change characteristic of the estimated shaft force F2 with respect to the steer angle $\theta_s$ is offset in the positive direction along the ordinate axis relative to the origin, for example. By this offset, the steer angle $\theta_s$ (that is, the zero point of the estimated shaft force F2) at which the estimated shaft force F2 is "0" is moved to a negative angle $-\theta_7$ relative to 0°, which is the steer angle $\theta_s$ corresponding to the neutral position of the steering wheel 11. At this time, each of the upper limit value $F_{UL}$ and the lower limit value $F_{LL}$ is set with reference to the value of the estimated shaft force F2 after the offset. Therefore, when an offset amount $\delta F$ of the estimated shaft force F2 is exceeding the lower limit width $F_L$, the value of the ideal shaft force F1 is limited to the lower limit value $F_{LL}$. Thereby, the steer angle $\theta_s$ at which the ideal shaft force F1 is "0" is moved to a negative angle $-\theta_8$ from 0°, which is the steer angle $\theta_s$ corresponding to the neutral position of the steering wheel 11. The absolute value of the angle $-\theta_8$ is smaller than the absolute value of the angle $-\theta_7$.

Therefore, when the absolute value of the steer angle $\theta_s$ is equal to or larger than the absolute value of the angle $-\theta_7$, the estimated shaft force F2 is set as the final shaft force $F_{ax}$. This is because the absolute value of the estimated shaft force F2 is a value equal to or smaller than the ideal shaft force F1 after the limiting.

Further, when the absolute value of the steer angle $\theta_s$ is exceeding the absolute value of the angle $-\theta_8$ and is smaller than the absolute value of the angle $-\theta_7$, "0" is set as the final shaft force $F_{ax}$. This is because the steer angle $\theta_s$ (the zero point of the estimated shaft force F2) at which the estimated shaft force F2 is "0" is offset to the negative angle $-\theta_7$ relative to 0°, which is the steer angle $\theta_s$ corresponding to the neutral position of the steering wheel 11. Further, when the absolute value of the steer angle $\theta_s$ is equal to or smaller than the absolute value of the angle $-\theta_8$, the ideal shaft force F1 after the limiting is set as the final shaft force $F_{ax}$. Also in the case where the steer angle $\theta_s$ is 0° or a positive value, the ideal shaft force F1 after the limiting is set as the final shaft force $F_{ax}$. This is because the absolute value of the ideal shaft force F1 is a smaller value than the absolute value of the estimated shaft force F2.

In this way, the ideal shaft force F1 is limited by the upper limit value $F_{UL}$ and the lower limit value $F_{LL}$ that are set with reference to the estimated shaft force F2, and thereby, the steer angle $\theta_s$ (that is, the zero point of the final shaft force $F_{ax}$) at which the value of the final shaft force $F_{ax}$ is "0" is closer to the angle $-\theta_7$ at which the value of the estimated shaft force F2 near to the actual shaft force is "0", compared to the case where the ideal shaft force F1 is not limited. That is, the deviation amount between the steer angle position at which the steering reaction force that the driver feels as the sensation in driver's hands is "0" and the steer angle position at which the estimated shaft force F2 is actually "0" decreases. Therefore, even when the oversteer has occurred in the vehicle, the driver can feel the steering reaction force corresponding to the actual shaft force, as the sensation in driver's hands, and thereby can perform the countersteer at a more appropriate timing.

Accordingly, with the first embodiment, the following effects can be obtained. Even when the oversteer has occurred in the vehicle, the ideal shaft force F1 is limited by the upper limit value $F_{UL}$ and the lower limit value $F_{LL}$ that are set with reference to the estimated shaft force F2. Thereby, the steer angle $\theta_s$ at which the value of the final shaft force $F_{ax}$ is "0" is closer to the angle $-\theta_7$ at which the value of the estimated shaft force F2 near to the actual shaft force is "0", compared to the case where the ideal shaft force F1 is not limited. That is, the difference between the steer angle $\theta_s$ at which the value of the final shaft force $F_{ax}$ is "0" and the steer angle $\theta_s$ at which the value of the estimated shaft force F2 near to the actual shaft force is "0" is reduced. Therefore, the deviation amount between the steer angle position at which the steering reaction force that the driver feels as the sensation in driver's hands through the steering wheel 11 is "0" and the steer angle position at which the actual estimated shaft force F2 is "0" decreases. Accordingly, even when the oversteer has occurred in the vehicle, the driver can feel the steering reaction force corresponding to the shaft force near to the actual shaft force, as the sensation in driver's hands, and thereby can perform the countersteer at a more appropriate timing.

Further, the actual road surface state is reflected in the estimated shaft force F2. Therefore, in the case where the vehicle, for example, is ordinarily traveling and where the steer angle $\theta_s$ is a value near 0° corresponding to the neutral position of steering wheel 11, it is possible that the value of the estimated shaft force F2 increases or decreases, for example, due to unevenness of the road surface caused by a track or the like. In this case, the ideal shaft force F1 in which the road surface state is not reflected is set as the final shaft force $F_{ax}$. Therefore, it is possible to restrain the unevenness of the road surface from being transmitted to the driver as the steering reaction force.

Next, a second embodiment of the steering control device will be described. Basically, the embodiment has the same configuration as the first embodiment shown in FIG. 1 to FIG. 4. The embodiment is different from the first embodiment, in that a configuration in which the selection unit 83 shown in FIG. 6 as the shaft force computation unit 73 is excluded is employed.

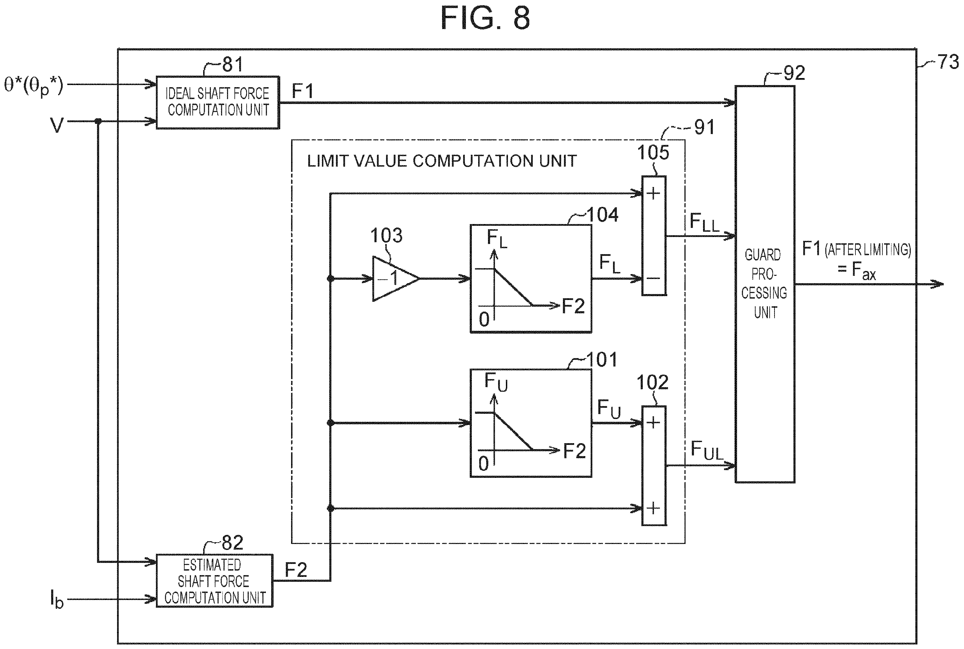

As shown in FIG. 8, the shaft force computation unit 73 includes the ideal shaft force computation unit 81, the estimated shaft force computation unit 82, the limit value computation unit 91 and the guard processing unit 92. The ideal shaft force computation unit 81, the estimated shaft force computation unit 82 and the limit value computation unit 91 have the same configurations and functions as those in the first embodiment. The guard processing unit 92 executes a limiting process for the ideal shaft force F1, using the upper limit value $F_{UL}$ and lower limit value $F_{LL}$ computed by the limit value computation unit 91. The guard processing unit 92 compares the value of the ideal shaft force F1 and the upper limit value $F_{UL}$, and compares the value of the ideal shaft force F1 and the lower limit value $F_{LL}$. In the case where the value of the ideal shaft force F1 is exceeding the upper limit value $F_{UL}$, the guard processing unit 92 limits the ideal shaft force F1 to the upper limit value $F_{UL}$. In the case where the value of the ideal shaft force F1 is below the lower limit value $F_{LL}$, the guard processing unit 92 limits the ideal shaft force F1 to the lower limit value $F_{LL}$. The guard processing unit 92 sets the ideal shaft force F1 after the limiting, as the final shaft force $F_{ax}$. When the value of the ideal shaft force F1 is a value in the range between the upper limit value $F_{UL}$ and the lower limit value $F_{LL}$, the guard processing unit 92 sets the ideal shaft force F1 computed by the ideal shaft force computation unit 81, as the final shaft force $F_{ax}$, with no change.

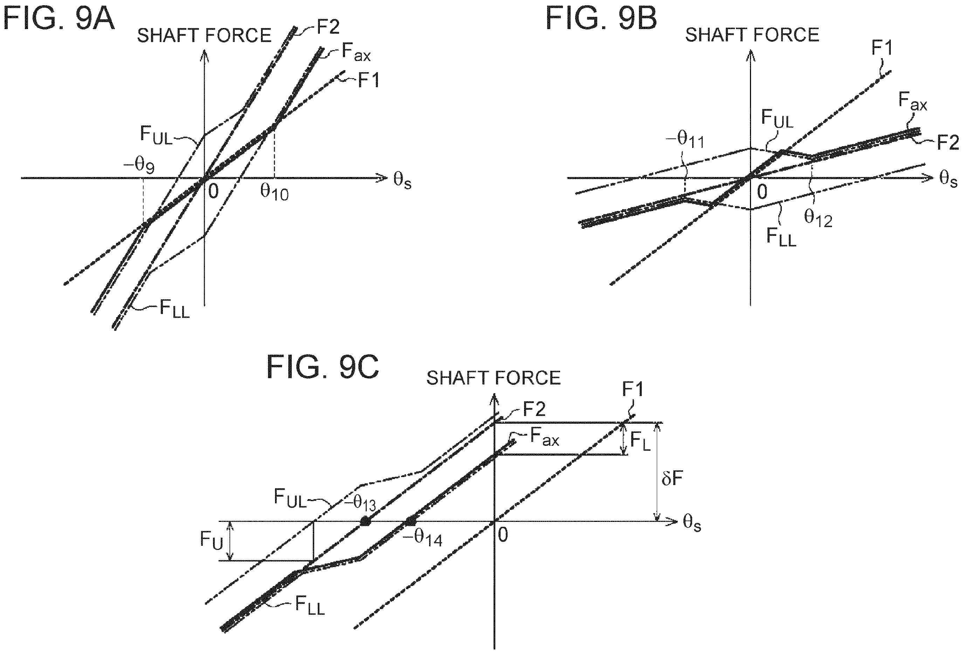

Next, the operation of the second embodiment will be described. As shown in a graph of FIG. 9A, in the case where the oversteer has not occurred in the vehicle, the ideal shaft force F1 and the estimated shaft force F2 respectively change along straight lines through the origin, with respect to the change in the steer angle $\theta_s$. For example, when the stationary steering is performed for parking or garaging, the absolute value of the estimated shaft force F2 is a larger value than the absolute value of the ideal shaft force F1. At this time, the final shaft force $F_{ax}$ that is the ideal shaft force F1 limited by the upper limit value $F_{UL}$ and the lower limit value $F_{LL}$ has the following characteristic.

That is, when the absolute value of the steer angle $\theta_s$ is equal to or larger than the absolute value of an angle $-\theta_9$, the ideal shaft force F1 is limited to the upper limit value $F_{UL}$. Further, when the absolute value of the steer angle $\theta_s$ is smaller than the absolute value of the angle $-\theta_9$ and is smaller than an angle $\theta_{10}$, the ideal shaft force F1 is not limited. Further, when the absolute value of the steer angle $\theta_s$ is equal to or larger than the absolute value of the angle $\theta_{10}$, the ideal shaft force F1 is limited to the lower limit value $F_{LL}$. Therefore, when the absolute value of the steer angle $\theta_s$ is equal to or larger than the absolute value of the angle $-\theta_9$, the ideal shaft force F1 limited to the upper limit value $F_{UL}$ is set as the final shaft force $F_{ax}$. Further, when the absolute value of the steer angle $\theta_s$ is smaller than the absolute value of the angle $-\theta_9$ and is smaller than the angle $\theta_{10}$, the ideal shaft force F1 computed by the ideal shaft force computation unit 81 is set as the final shaft force $F_{ax}$ with no change. Further, when the absolute value of the steer angle $\theta_s$ is equal to or larger than the absolute value of the angle $\theta_{10}$, the ideal shaft force F1 limited to the lower limit value $F_{LL}$ is set as the final shaft force $F_{ax}$.

In this way, for example, in the case where the stationary steering is performed, the absolute value of the final shaft force $F_{ax}$ that is the ideal shaft force F1 after the limiting is a smaller value than the absolute value of the estimated shaft force F2, in the whole steer angle range of the steering wheel 11. Therefore, it is possible to restrain the steering reaction force generated by the reaction motor 31 from becoming excessively large, and furthermore to restrain the sensation in driver's hands through the steering wheel 11 from becoming excessively heavy.

As shown in a graph of FIG. 9B, in the case where the oversteer has not occurred in the vehicle, the ideal shaft force F1 and the estimated shaft force F2 respectively change along straight lines through the origin, with respect to the change in the steer angle $\theta_s$. For example, in the case where the vehicle is traveling on the low-friction road, the absolute value of the estimated shaft force F2 is a smaller value than the absolute value of the ideal shaft force F1. At this time, the final shaft force $F_{ax}$ that is the ideal shaft force F1 limited by the upper limit value $F_{UL}$ and the lower limit value $F_{LL}$ has the following characteristic.

That is, when the absolute value of the steer angle $\theta_s$ is equal to or larger than the absolute value of a negative angle $-\theta_{11}$, the ideal shaft force F1 is limited to the lower limit value $F_{LL}$. When the absolute value of the steer angle $\theta_s$ is smaller than the absolute value of the negative angle $-\theta_{11}$ and is smaller than a positive angle $\theta_{12}$, the ideal shaft force F1 is not limited. When the absolute value of the steer angle $\theta_s$ is equal to or larger than the absolute value of the positive angle $\theta_{12}$,

the ideal shaft force F1 is limited to the upper limit value $F_{UL}$. Therefore, when the absolute value of the steer angle $\theta_s$ is equal to or larger than the absolute value of the negative angle $-\theta_{11}$, the ideal shaft force F1 limited to the lower limit value $F_{LL}$ is set as the final shaft force $F_{ax}$. When the absolute value of the steer angle $\theta_s$ is smaller than the absolute value of the negative angle $-\theta_{11}$ and is smaller than the positive angle $\theta_{12}$, the ideal shaft force F1 computed by the ideal shaft force computation unit 81 is set as the final shaft force $F_{ax}$ with no change. When the absolute value of the steer angle $\theta_s$ is equal to or larger than the absolute value of the positive angle $\theta_{12}$, the ideal shaft force F1 limited to the upper limit value $F_{UL}$ is set as the final shaft force $F_{ax}$.

In this way, the ideal shaft force F1 limited by the upper limit value $F_{UL}$ and the lower limit value $F_{LL}$ is set as the final shaft force $F_{ax}$, and thereby the final shaft force $F_{ax}$ becomes a value closer to the estimated shaft force F2 near to the actual shaft force. The upper limit value $F_{UL}$ and the lower limit value $F_{LL}$ is set so as to follow up the estimated shaft force F2 that changes with the change in road surface grip, for example. Therefore, it is possible to more appropriately inform the driver of the decrease in road surface grip as the steering reaction force, compared to the case where the ideal shaft force F1 computed by the ideal shaft force computation unit 81 is set as the final shaft force $F_{ax}$ with no change

As shown in a graph of FIG. 9C, in the case where the oversteer has occurred in the vehicle, a characteristic line indicating the change characteristic of the estimated shaft force F2 with respect to the steer angle $\theta_s$ is offset in the positive direction along the ordinate axis relative to the origin, for example. By this offset, the steer angle $\theta_s$ (that is, the zero point of the estimated shaft force F2) at which the estimated shaft force F2 is "0" is moved to a negative angle $-\theta_{13}$ relative to 0°, which is the steer angle $\theta_s$ corresponding to the neutral position of the steering wheel 11.

At this time, each of the upper limit value $F_{UL}$ and the lower limit value $F_{LL}$ is set with reference to the value of the estimated shaft force F2 after the offset. Therefore, when the offset amount $\delta F$ of the estimated shaft force F2 is exceeding the lower limit width $F_L$, the value of the ideal shaft force F1 is limited to the lower limit value $F_{LL}$, in the whole steer angle range of the steering wheel 11. That is, the final shaft force $F_{ax}$ changes so as to coincide with the lower limit value $F_{LL}$ set with reference to the estimated shaft force F2, in the whole steer angle range of the steering wheel 11. Thereby, the steer angle $\theta_s$ at which the ideal shaft force F1 is "0" is moved to a negative angle $-\theta_{14}$ from 0°, which is the steer angle $\theta_s$ corresponding to the neutral position of the steering wheel 11. The absolute value of the angle $-\theta_{14}$ is smaller than the absolute value of the angle $-\theta_{13}$.

Therefore, since the ideal shaft force F1 limited to the lower limit value $F_{LL}$ that is set with reference to the estimated shaft force F2 is set as the final shaft force

$F_{ax}$, the steer angle $\theta_s$ (that is, the zero point of the final shaft force $F_{ax}$) at which the value of the final shaft force $F_{ax}$ is "0" is closer to the angle $-\theta_{13}$ at which the value of the estimated shaft force F2 near to the actual shaft force is "0", compared to the case where the ideal shaft force F1 is not limited. That is, the deviation amount between the steer angle position at which the steering reaction force that the driver feels as the sensation in driver's hands is "0" and the steer angle position at which the actual estimated shaft force F2 is "0" decreases. Therefore, even when the oversteer has occurred in the vehicle, the driver can feel the steering reaction force corresponding to the actual shaft force, as the sensation in driver's hands, and thereby can perform the countersteer at a more appropriate timing.

Accordingly, with the second embodiment, it is possible to obtain the same effects as the effects in the first embodiment.

Next, a third embodiment of the steering control device will be described. Basically, the embodiment has the same configuration as the first embodiment shown in FIG. 1 to FIG. 3. The embodiment is different from the first embodiment in the configuration of the shaft force computation unit 73. The embodiment may be applied to the second embodiment.

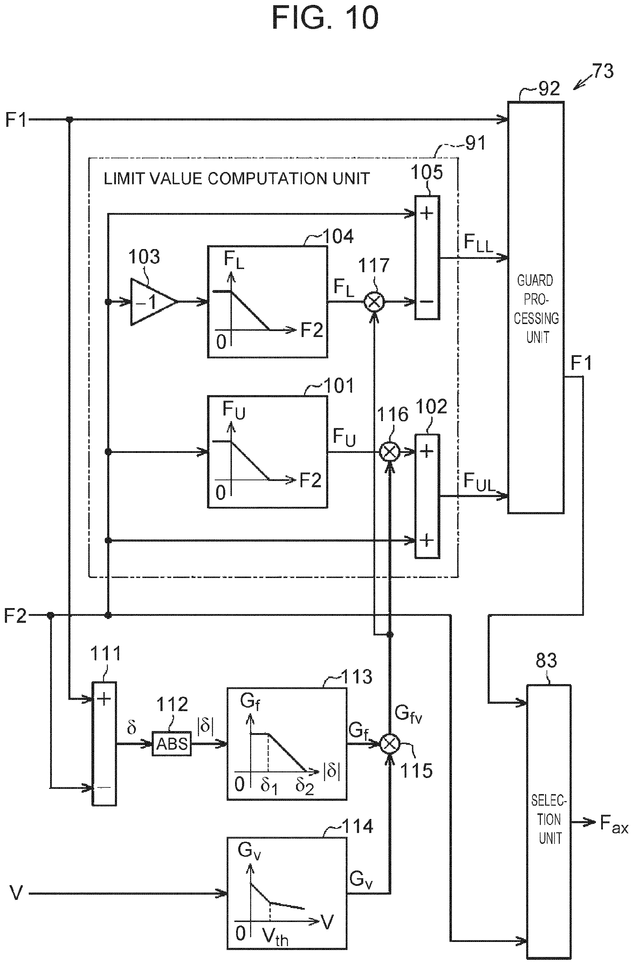

As shown in FIG. 10, the shaft force computation unit 73 includes a subtractor 111, an absolute value computation unit 112, two gain computation units 113, 114 and a multiplier 115, in addition to the ideal shaft force computation unit 81, the estimated shaft force computation unit 82, the limit value computation unit 91, the guard processing unit 92 and the selection unit 83. Further, the limit value computation unit 91 includes two multipliers 116, 117, in addition to the upper limit width computation unit 101, the adder 102, the multiplier 103, the lower limit width computation unit 104 and the subtractor 105. The multiplier 116 is provided on a computation path between the upper limit width computation unit 101 and the adder 102. The multiplier 117 is provided on a computation path between the lower limit width computation unit 104 and the subtractor 105.

The subtractor 111 computes a difference value $\delta$ by subtracting the estimated shaft force F2 computed by the estimated shaft force computation unit 82 from the ideal shaft force F1 computed by the ideal shaft force computation unit 81. The absolute value computation unit 112 computes an absolute value $|\delta|$ of the difference value $\delta$ computed by the subtractor 111.

The gain computation unit 113 computes a gain Gf based on the absolute value $|\delta|$ computed by the absolute value computation unit 112. The gain computation unit 113 computes the gain Gf using a map that specifies a relation between the absolute value $|\delta|$ of the difference value $\delta$ and the gain Gf. The map is a map in which an abscissa axis indicates the absolute value $|\delta|$ of the difference value $\delta$ and an ordinate axis indicates the gain Gf, and has the following characteristic. That is, when the absolute value $|\delta|$ of the difference value $\delta$ is equal to or smaller than a value $\delta_1$ near "0", the gain Gf is maintained at a positive constant value G1. When the absolute value $|\delta|$ of the difference value $\delta$ is exceeding the value $\delta_1$ near "0" and is a value equal to or smaller than a predetermined value $\delta_2$, the gain Gf is set to a smaller value as the absolute value $|\delta|$ of the difference value $\delta$ increases. When the absolute value $|\delta|$ of the difference value $\delta$ is exceeding a predetermined value $\delta_2$, the gain Gf is set to "0".

The gain computation unit 114 computes a gain $G_v$ based on the vehicle speed V detected through the vehicle speed sensor 501. The gain computation unit 114 computes the gain $G_v$ using a map that specifies a relation between the vehicle speed and the gain $G_v$. The map is a map in which an abscissa axis indicates the vehicle speed V and an ordinate axis indicates the gain $G_v$, and has the following characteristic. That is, the gain $G_v$ is set to a smaller value as the vehicle speed V increases. A slope that is the decrease rate of the gain $G_v$ with respect to increase in the vehicle speed V changes between before and after the vehicle speed V exceeds a vehicle speed threshold $V_{th}$. That is, the slope of the gain $G_v$ with respect to the vehicle speed V after the vehicle speed V exceeds the vehicle speed threshold $V_{th}$ is smaller than the slope of the gain $G_v$ with respect to the vehicle speed V when the vehicle speed V is equal to or lower than the vehicle speed threshold $V_{th}$.

The multiplier 115 computes a final gain $G_{fv}$ by multiplying the gain Gf computed by the gain computation unit 113 and the gain $G_v$ computed by the gain computation unit 114.

The multiplier 116 computes the final upper limit width Fu by multiplying the upper limit width $F_U$ computed by the upper limit width computation unit 101 by the final gain $G_{fv}$. The multiplier 117 computes the final lower limit width $F_L$ by multiplying the lower limit width $F_L$ computed by the lower limit width computation unit 104 by the final gain $G_{fv}$.

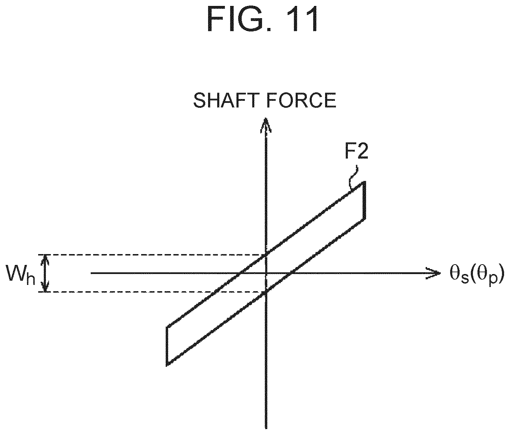

Next, the operation of the third embodiment will be described. As shown in FIG. 11, the estimated shaft force F2 computed by the estimated shaft force computation unit 82 has a hysteresis characteristic with respect to a change in the steer angle $\theta_s$ or the pinion angle $\theta_p$. As the vehicle speed V is higher, a hysteresis width $W_h$ is smaller. Conversely, as the vehicle speed V is lower, the hysteresis width $W_h$ is larger. For example, as the vehicle speed V is higher, the estimated shaft force F2 changes so as to be more similar to a straight line with respect to the steer angle $\theta_s$. Therefore, in the case where a constant upper limit value $F_{UL}$ and a constant lower limit value $F_{LL}$ are always set for the estimated shaft force F2 regardless of the vehicle speed V, there is a fear that the set upper limit value $F_{UL}$ and lower limit value $F_{LL}$ are not appropriate values corresponding to the vehicle speed V.

In this respect, in the embodiment, the upper limit width Fu computed by the upper limit width computation unit 101 and the lower limit width $F_L$ computed by the lower limit width computation unit 104 are multiplied by the final gain $G_{fv}$ that reflects the gain $G_v$ corresponding to the vehicle speed V. Therefore, as the vehicle speed V is higher, the values of the upper limit width $F_U$ and the lower limit width $F_L$ are smaller, and as the vehicle speed V is lower, the values of the upper limit width $F_U$ and the lower limit width $F_L$ are larger. That is, as the vehicle speed V is higher, a limit width for the ideal shaft force F1 that is decided by the upper limit width $F_U$ and the lower limit width $F_L$ is smaller, and as the vehicle speed V is lower, the limit width for the ideal shaft force F1 that is decided by the upper limit width $F_U$ and the lower limit width $F_L$ is larger. In this way, the values of the upper limit width $F_U$ and the lower limit width $F_L$, and furthermore the limit width for the ideal shaft force F1 are optimized depending on the vehicle speed V.

Further, in the embodiment, the upper limit width Fu computed by the upper limit width computation unit 101 and the lower limit width $F_L$ computed by the lower limit width computation unit 104 are multiplied by the final gain $G_{fv}$ that reflects the gain Gf corresponding to the difference value δ that is the difference between the ideal shaft force F1 and the estimated shaft force F2. Therefore, as the difference value δ is larger, the values of the upper limit width $F_U$ and the lower limit width $F_L$ are smaller, and as the difference value δ is smaller, the values of the upper limit width Fu and the lower limit width $F_L$ are larger. That is, as the difference value δ is larger, the limit width for the ideal shaft force F1 that is decided by the upper limit width $F_U$ and the lower limit width $F_L$ is smaller, and as the difference value δ is smaller, the limit width for the ideal shaft force F1 that is decided by the upper limit width $F_U$ and the lower limit width $F_L$ is larger. In this way, the values of the upper limit width Fu and the lower limit width $F_L$, and furthermore the limit width for the ideal shaft force F1 are optimized depending on the difference value δ.

The configuration of adjusting the values of the upper limit width Fu and the lower limit width $F_L$ depending on the difference value δ is suitable, particularly, when the absolute value of the estimated shaft force F2 is smaller than the absolute value of the ideal shaft force F1, as shown in FIG. 9B, in the case where the embodiment is applied to the second embodiment.

For example, when the vehicle is traveling on the low-friction road such as a wet road or a snow road, the difference value δ between the ideal shaft force F1 and the estimated shaft force F2 is easily generated. The reason is shown as follows. That is, the ideal shaft force F1 is computed based on the target pinion angle $\theta_\rho$*, and therefore it is hard for the ideal shaft force F1 to reflect the road surface state. On the other hand, the estimated shaft force F2 is computed based on the value of the electric current $I_b$ that is supplied to the turning motor 41 and that reflects the road surface state, and therefore it is easy for the estimated shaft force F2 to reflect the road surface state. Therefore, the estimated shaft force F2 decreases with the decrease in road surface grip, while the ideal shaft force F1 becomes a value corresponding to the target pinion angle $\theta_\rho$ regardless of the grip state of the tire. Accordingly, as the road surface grip of the tire decreases, the absolute value of the estimated shaft force F2 becomes a smaller value, and thereby the difference value δ between the ideal shaft force F1 and the estimated shaft force F2 becomes a larger value.

In the embodiment, as the road surface grip of the tire decreases, that is, as the difference value δ between the ideal shaft force F1 and the estimated shaft force F2 becomes a larger value, the limit width for the ideal shaft force F1 is reduced. Therefore, the value of the final shaft force $F_{ax}$ that is the ideal shaft force F1 after the limiting is a value nearer to the estimated shaft force F2. Accordingly, it is possible to inform the driver of the decrease in the road surface grip of the tire, as the steering reaction force through the steering wheel 11, more appropriately and rapidly.

Further, the configuration of adjusting the values of the upper limit width $F_U$ and the lower limit width $F_L$ depending on the difference value δ is also suitable when the oversteer has occurred in the vehicle, as shown in FIG. 9C, in the case where the embodiment is applied to the second embodiment.

As the offset amount δF of the estimated shaft force F2 increases, the difference value δ between the ideal shaft force F1 and the estimated shaft force F2 becomes a larger value. That is, as the offset amount δF of the estimated shaft force F2 increases, the limit width for the ideal shaft force F1 is reduced, and thereby the value of the final shaft force $F_{ax}$ that is the ideal shaft force F1 after the limiting is a value nearer to the estimated shaft force F2. Therefore, the difference between the steer angle $\theta_s$ ($\theta_s = -\theta_{14}$) at which the value of the final shaft force $F_{ax}$ is "0" and the steer angle $\theta_s$ ($\theta_S = -\theta_{13}$) at which the value of the estimated shaft force F2 near to the actual shaft force is "0" becomes smaller. Furthermore, the deviation amount between the steer angle position at which the steering reaction force that the driver feels as the sensation in driver's hands through the steering wheel 11 is "0" and the steer angle position at which the estimated shaft force F2 is actually "0" further decreases. Accordingly, even when the oversteer has occurred in the vehicle, the driver can feel the steering reaction force corresponding to the shaft force near to the actual shaft force, as the sensation in driver's hands, and thereby can perform the countersteer at a more appropriate timing.

Incidentally, the configuration of adjusting the values of the upper limit width $F_U$ and the lower limit width $F_L$ depending on the difference value δ is also suitable when the oversteer has occurred in the vehicle, as shown in FIG. 7D, in the case where the embodiment is applied to the first embodiment.

Further, a configuration of including only one of the configuration of adjusting the values of the upper limit width $F_U$ and the lower limit width $F_L$ depending on the vehicle speed V and the configuration of adjusting the values of the upper limit width $F_U$ and the lower limit width $F_L$ depending on the difference value $\delta$ may be employed as the shaft force computation unit 73.

Accordingly, with the third embodiment, the following effects can be obtained in addition to the effects in the first embodiment. The values of the upper limit width $F_U$ and the lower limit width $F_L$, and furthermore the limit width for the ideal shaft force F1 are adjusted depending on the vehicle speed V. Therefore, it is possible to optimize the values of the upper limit width Fu and the lower limit width $F_L$, and furthermore the limit width for the ideal shaft force F1, depending on the difference value $\delta$.

The values of the upper limit width Fu and the lower limit width $F_L$, and furthermore the limit width for the ideal shaft force F1 are adjusted depending on the difference value $\delta$. It is possible to optimize the values of the upper limit width Fu and the lower limit width $F_L$, and furthermore the limit width for the ideal shaft force F1, depending on the vehicle speed V.

The above embodiments may be carried out while being modified as follows. In the first to third embodiments, a clutch may be provided in the steering apparatus 10. In this case, as shown by a two-dot chain line in FIG. 1, the steering shaft 12 and the pinion shaft 13 are coupled through a clutch 21. As the clutch 21, an electromagnetic clutch that connects and disconnects dynamic force by electric connection and disconnection of an exciting coil is employed. The control device 50 executes a connection-disconnection control to switch the clutch 21 between connection and disconnection. When the clutch 21 is disconnected, the dynamic force transmission between the steering wheel 11 and the turning wheels 16 is mechanically disconnected. When the clutch 21 is connected, the dynamic force transmission between the steering wheel 11 and the turning wheels 16 is mechanically connected.

In the first to third embodiments, one shaft force of (B1) to (B3) described below may be used as the estimated shaft force that is computed by the shaft force computation unit 73. The road surface state or the vehicle behavior is reflected also in the shaft forces of (B 1) to (B3).

    (B1) An estimated shaft force that is computed based on at least one of the lateral acceleration and the yaw rate
    (B2) A shaft force that is detected through a shaft force sensor
    (B3) A tire force that is detected through a tire force sensor, or a tire shaft force that is computed based on the tire force

In the first to third embodiments, the ideal shaft force computation unit 81 computes the ideal shaft force F1 based on the target pinion angle $\theta_p{}^*$. However, the ideal shaft force computation unit 81 may compute the ideal shaft force F1 using the pinion angle $\theta_p$ computed by the pinion angle computation unit 61 or the steer angle $\theta_s$ computed by the steer angle computation unit 51.

In the first to third embodiments, a configuration of excluding the adder 76 shown in FIG. 3 as the steering reaction force command value computation unit 52 may be employed. In this case, the second steering reaction force command value $T_2{}^*$ computed by the steer angle feedback control unit 75 is used as the steering reaction force command value $T^*$.

In the first to third embodiments, the following configuration may be employed as the steering reaction force command value computation unit 52 shown in FIG. 3. That is, in the steering reaction force command value computation unit 52, a target steering reaction force computation unit that computes the first steering reaction force command value $T_1{}^*$ as the target steering reaction force is provided instead of the target steering torque computation unit 71 and the torque feedback control unit 72 shown in FIG. 3. The target steering reaction force computation unit computes the first steering reaction force command value $T_1{}^*$ as the target steering reaction force, for example, using a three-dimensional map that specifies a relation between the steering torque $T_h$ and the target steering reaction force depending on the vehicle speed V.

Incidentally, the target steering reaction force computation unit may take in the shaft force $F_{ax}$ for the turning shaft 14 that is computed by the shaft force computation unit 73, in addition to the steering torque $T_h$ and the vehicle speed V, and may compute the first steering reaction force command value $T_1{}^*$ based on the taken steering torque $T_h$, vehicle speed V and shaft force $F_{ax}$. Further, the target steering reaction force computation unit may take in only the shaft force $F_{ax}$ computed by the shaft force computation unit 73, without taking in the steering torque $T_h$ and the vehicle speed V, and may compute the first steering reaction force command value $T_1{}^*$ as the target steering reaction force, based on the taken shaft force $F_{ax}$.

In the first to third embodiments, in the case where the estimated shaft force F2 is a positive value, the upper limit width Fu and the lower limit width $F_L$ are set so as to gradually decrease to "0" as the absolute value of the estimated shaft force F2 increases. However, the upper limit width Fu and the lower limit width $F_L$ may be set in the following way. That is, in the case where the estimated shaft force F2 is a positive value, the upper limit width Fu and the lower limit width $F_L$ are maintained at positive constant values, similarly to the case where the estimated shaft force F2 is a negative value.

**Claims**

1. A control device (50) for a steering apparatus (10), the steering apparatus (10) including a reaction motor (31) that generates a steering reaction force, the steering reaction force being a torque that is given to a steering shaft and that is in an opposite direction of a steering direction, dynamic force transmission between the steering shaft and a turning shaft being isolated, the turning shaft turning a turning wheel,

the control device (50) configured to control the reaction motor based on a command value that is computed depending on a steering state, the control device (50) comprising:

a first computation circuit (81) configured to compute a first shaft force based on a state variable that is able to be converted into a rotation angle of a rotation body, the first shaft force being an ideal shaft force that acts on the turning shaft, the rotation body rotating depending on a motion of a steering wheel; and

a second computation circuit (82) configured to compute a second shaft force based on a state variable that reflects a road surface state or a vehicle behavior, the second shaft force being a force that acts on the turning shaft; the control device (50) being **characterized by** further comprising

a third computation circuit configured to set a limit value with reference to the second shaft force, the limit value being a value that limits a variation range of the first shaft force, the third computation circuit being configured to compute a final shaft force using the limit value, through execution of a limiting process by which the first shaft force is limited, the final shaft force being reflected in the command value.

2. The control device (50) for the steering apparatus (10) according to claim 1, **characterized in that** the third computation circuit is configured to compute a shaft force that is of the first shaft force after the limiting process and the second shaft force and that has a smaller absolute value, as the final shaft force.

3. The control device (50) for the steering apparatus (10) according to claim 1, **characterized in that** the third computation circuit is configured to compute the first shaft force after the limiting process, as the final shaft force.

4. The control device (50) for the steering apparatus (10) according to any one of claims 1 to 3, **characterized in that** the third computation circuit is configured to adjust the limit value depending on a vehicle speed.

5. The control device (50) for the steering apparatus (10) according to any one of claims 1 to 4, **characterized in that** the third computation circuit is configured to adjust the limit value depending on a difference value between the first shaft force and the second shaft force.

6. The control device (50) for the steering apparatus (10) according to any one of claims 1 to 5, **characterized in that** the second computation circuit (82) is configured to compute the second shaft force, based on a value of an electric current that is supplied to a turning motor, as the state variable, the turning motor being a generation source of a turning force that is given to the turning shaft.

**Patentansprüche**

1. Steuervorrichtung (50) für eine Lenkvorrichtung (10), wobei die Lenkvorrichtung (10) einen Reaktionsmotor (31) enthält, der eine Lenkreaktionskraft erzeugt, wobei die Lenkreaktionskraft ein Drehmoment ist, das auf eine Lenkwelle ausgeübt wird und das in einer entgegengesetzten Richtung zu einer Lenkrichtung verläuft, wobei eine dynamische Kraftübertragung zwischen der Lenkwelle und einer Drehwelle isoliert ist, wobei die Drehwelle ein Drehrad dreht,

die Steuervorrichtung (50) so konfiguriert ist, dass sie den Reaktionsmotor basierend auf einem Befehlswert steuert, der in Abhängigkeit von einem Lenkzustand berechnet wird, wobei die Steuervorrichtung (50) eine erste Berechnungsschaltung (81), die so konfiguriert ist, dass sie eine erste Wellenkraft basierend auf einer Zustandsvariablen berechnet, die in einen Drehwinkel eines Drehkörpers umgewandelt werden kann, wobei die erste Wellenkraft eine ideale Wellenkraft ist, die auf die Drehwelle wirkt, wobei sich der Drehkörper in Abhängigkeit von einer Bewegung eines Lenkrads dreht; und eine zweite Berechnungsschaltung (82) aufweist, die so konfiguriert ist, dass sie eine zweite Wellenkraft basierend auf einer Zustandsvariablen berechnet, die einen Straßenoberflächenzustand oder ein Fahrzeugverhalten widerspiegelt, wobei die zweite Wellenkraft eine Kraft ist, die auf die Drehwelle wirkt; **dadurch gekennzeichnet, dass** die Steuervorrichtung ferner eine dritte Berechnungsschaltung aufweist, die so konfiguriert ist, dass sie einen Grenzwert in Bezug auf die zweite Wellenkraft festsetzt, wobei der Grenzwert ein Wert ist, der einen Variationsbereich der ersten Wellenkraft begrenzt, wobei die dritte Berechnungsschaltung so konfiguriert ist, dass sie eine endgültige Wellenkraft unter Verwendung des Grenzwertes durch Ausführung eines Begrenzungsvorgangs berechnet, durch den die erste Wellenkraft begrenzt wird, wobei die endgültige Wellenkraft in dem Befehlswert widergespiegelt wird.

**2.** Steuervorrichtung (50) für die Lenkvorrichtung (10) nach Anspruch 1, **dadurch gekennzeichnet, dass** die dritte Berechnungsschaltung so konfiguriert ist, dass sie als endgültige Wellenkraft eine Wellenkraft berechnet, die aus der ersten Wellenkraft nach dem Begrenzungsvorgang und der zweiten Wellenkraft besteht und einen kleineren Absolutwert aufweist.

**3.** Steuervorrichtung (50) für die Lenkvorrichtung (10) nach Anspruch 1, **dadurch gekennzeichnet, dass** die dritte Berechnungsschaltung so konfiguriert ist, dass sie die erste Wellenkraft nach dem Begrenzungsvorgang als die endgültige Wellenkraft berechnet.

**4.** Steuereinrichtung (50) für die Lenkvorrichtung (10) nach einem der Ansprüche 1 bis 3, **dadurch gekennzeichnet, dass** die dritte Berechnungsschaltung so konfiguriert ist, dass sie den Grenzwert in Abhängigkeit von einer Fahrzeuggeschwindigkeit einstellt.

**5.** Steuervorrichtung (50) für die Lenkvorrichtung (10) nach einem der Ansprüche 1 bis 4, **dadurch gekennzeichnet, dass** die dritte Berechnungsschaltung so konfiguriert ist, dass sie den Grenzwert in Abhängigkeit von einem Differenzwert zwischen der ersten Wellenkraft und der zweiten Wellenkraft einstellt.

**6.** Steuervorrichtung (50) für die Lenkvorrichtung (10) nach einem der Ansprüche 1 bis 5, **dadurch gekennzeichnet, dass** die zweite Berechnungsschaltung (82) so konfiguriert ist, dass sie die zweite Wellenkraft basierend auf einem Wert eines elektrischen Stroms, der einem Drehmotor zugeführt wird, als Zustandsvariable berechnet, wobei der Drehmotor eine Erzeugungsquelle einer Drehkraft ist, die auf die Drehwelle gegeben wird.

**Revendications**

**1.** Dispositif de commande (50) pour un appareil de direction (10), l'appareil de direction (10) incluant un moteur à réaction (31) qui génère une force de réaction de direction, la force de réaction de direction étant un couple qui est donné à un arbre de direction et qui est dans un sens opposé à un sens de direction, une transmission de force dynamique entre l'arbre de direction et un arbre tournant étant isolée, l'arbre tournant faisant tourner une roue tournante,

le dispositif de commande (50) étant configuré pour commander le moteur à réaction sur la base d'une valeur d'instruction qui est calculée en fonction d'un état de direction,
le dispositif de commande (50) comprenant :

un premier circuit de calcul (81) configuré pour calculer une première force d'arbre sur la base d'une variable d'état qui est capable d'être convertie en un angle de rotation d'un corps de rotation, la première force d'arbre étant une force d'arbre idéale qui agit sur l'arbre tournant, le corps de rotation effectuant une rotation en fonction d'un mouvement d'une roue de direction ; et
un deuxième circuit de calcul (82) configuré pour calculer une seconde force d'arbre sur la base d'une variable d'état qui reflète un état de surface de route ou un comportement de véhicule, la seconde force d'arbre étant une force qui agit sur l'arbre tournant ;
le dispositif de commande (50) étant **caractérisé en ce qu'**il comprend en outre
un troisième circuit de calcul configuré pour fixer une valeur de limite en référence à la seconde force d'arbre, la valeur de limite étant une valeur qui limite une plage de variation de la première force d'arbre, le troisième circuit de calcul étant configuré pour calculer une force d'arbre finale en utilisant la valeur de limite, par le biais d'une exécution d'un processus de limitation par lequel la première force d'arbre est limitée, la force d'arbre finale se reflétant dans la valeur d'instruction.

**2.** Dispositif de commande (50) pour l'appareil de direction (10) selon la revendication 1, **caractérisé en ce que** le troisième circuit de calcul est configuré pour calculer une force d'arbre qui est constituée de la première force d'arbre après le processus de limitation et de la seconde force d'arbre et qui présente une valeur absolue plus petite, en tant que force d'arbre finale.

**3.** Dispositif de commande (50) pour l'appareil de direction (10) selon la revendication 1, **caractérisé en ce que** le troisième circuit de calcul est configuré pour calculer la première force d'arbre après le processus de limitation, en tant que force d'arbre finale.

**4.** Dispositif de commande (50) pour l'appareil de direction (10) selon l'une quelconque des revendications 1 à 3, **caractérisé en ce que** le troisième circuit de calcul est configuré pour ajuster la valeur de limite en fonction d'une vitesse de véhicule.

**5.** Dispositif de commande (50) pour l'appareil de direction (10) selon l'une quelconque des revendications 1 à 4, **caractérisé en ce que** le troisième circuit de calcul est configuré pour ajuster la valeur de limite en fonction d'une valeur de différence entre la première force d'arbre et la seconde force d'arbre.

6. Dispositif de commande (50) pour l'appareil de direction (10) selon l'une quelconque des revendications 1 à 5, **caractérisé en ce que** le deuxième circuit de calcul (82) est configuré pour calculer la seconde force d'arbre, sur la base d'une valeur d'un courant électrique qui est fourni à un moteur tournant, en tant que variable d'état, le moteur tournant étant une source de génération d'une force tournante qui est donnée à l'arbre tournant.

# FIG. 1

# FIG. 2

EP 3 744 613 B1

# FIG. 3

EP 3 744 613 B1

# FIG. 4

$\theta^*(\theta_p{}^*)$

V

$I_b$

81 — IDEAL SHAFT FORCE COMPUTATION UNIT → F1

82 — ESTIMATED SHAFT FORCE COMPUTATION UNIT → F2

83 — SELECTION UNIT → $F_{ax}$

73

FIG. 5A

FIG. 5B

FIG. 5C

# FIG. 6

FIG. 7A

FIG. 7B

FIG. 7C

FIG. 7D

# FIG. 8

FIG. 9B

SHAFT FORCE

FIG. 9A

SHAFT FORCE

FIG. 9C

SHAFT FORCE

# FIG. 10

# FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6107149 B